# EUROPÄISCHE PATENTSCHRIFT

(11) **EP 4 139 629 B1**
(45) Veröffentlichungstag und Bekanntmachung des Hinweises auf die Patenterteilung: **19.08.2026**
(21) Anmeldenummer: 21720254.8
(22) Anmeldetag: 20.04.2021
(51) Int. Cl.: G01B 9/02, G01B 9/02055, G01B 9/02091

(54) **VERFAHREN UND VORRICHTUNG ZUM ENTZERREN VON KOHÄRENZTOMOGRAPHIE-BILDERN**
METHOD AND DEVICE FOR EQUALIZING COHERENCE TOMOGRAPHY IMAGES
PROCÉDÉ ET DISPOSITIF D'ÉGALISATION DES IMAGES DE TOMOGRAPHIE PAR COHÉRENCE

(30) Priorität: 22.04.2020 EP 20170895
(43) Veröffentlichungstag der Anmeldung: 01.03.2023
(73) Patentinhaber: Zumbach Electronic AG, 2552 Orpund (CH)
(72) Erfinder: BALEMI, Silvano, 6598 Tenero (CH)
(74) Vertreter: Meissner Bolte Partnerschaft mbB
(86) Internationale Anmeldenummer: PCT/EP2021/060260
(87) Internationale Veröffentlichungsnummer: WO 2021/214072

(56) Entgegenhaltungen:
- US-A1- 2019 191 990
- ZHOU KEVIN C ET AL: "Optical coherence refraction tomography", NATURE PHOTONICS, NATURE PUBLISHING GROUP, UK, vol. 13, no. 11, 19 August 2019 (2019-08-19), pages 794 - 802, XP036917112, ISSN: 1749-4885, [retrieved on 20190819], DOI: 10.1038/S41566-019-0508-1
- TOMLINS PETER H., TEDALDI MATTHEW, FERGUSON ROBERT A., WANG RUIKANG K.: "Stereoscopic optical coherence tomography in the frequency domain for refractive index sensitive imaging", SPIE, PO BOX 10 BELLINGHAM WA 98227-0010 USA, vol. 6627, 26 June 2007 (2007-06-26), pages 66270O, XP040242862, DOI: 10.1117/12.728040
- CHRISTOS PHOTIOU ET AL: "Dual-angle optical coherence tomography for index of refraction estimation using rigid registration and cross-correlation", JOURNAL OF BIOMEDICAL OPTICS, vol. 24, no. 10, 4 October 2019 (2019-10-04), pages 1, XP055735335, ISSN: 1083-3668, DOI: 10.1117/1.JBO.24.10.106001

## Beschreibung

Die Erfindung betrifft ein Verfahren zum Entzerren von Bildern eines langgestreckten, insbesondere transluzenten, Objekts, die insbesondere mittels eines optischen Kohärenztomographie-Verfahrens erzeugt werden, ein computerlesbares Medium, eine Vorrichtung zum Entzerren von Bildern eines Objekts, sowie ein System.

Bei bildgebenden Systemen, wie beispielsweise optischen Kohärenztomographie-(OCT-)Systemen, können, insbesondere transluzente und/oder opake langgestreckte, Objekte (räumlich) erfasst werden. Oftmals werden bei der optischen Kohärenztomographie Bilder von zumindest einem (Teil-)Bereich des zu erfassenden (zu messenden) Objekts, einer Region-of-Interest (ROI), erzeugt, beispielsweise indem ein breitbandiges Lichtsignal mit einer geringen Kohärenzlänge zeitlich (bei einem OCT-Verfahren im Zeitbereich, der *Time-Domain,* (TD-OCT) wie auch im Frequenzbereich mit Hilfe eines Spektrometers, der *Frequency-Domain,* (FT-OCT)) oder ein in der Wellenlänge zeitvariierendes monochromatisches Lichtsignal (bei einem OCT-Verfahren im Frequenzbereich mit einer wellenlängengesteuerten Quelle, der *Swept-Source* (SS-OCT)) in einem Strahlteiler in mindestens zwei Teilsignale aufgeteilt wird. Ein erstes Teilsignal (das Abstrahlsignal) wird auf einen Bereich des zu erfassenden Objekts abgestrahlt und ein zweites Teilsignal (das Referenzsignal) durchläuft eine Referenzstrecke.

Das von dem zu erfassenden Objekt reflektierte erste Teilsignal (Messsignal) wird mit dem Referenzsignal in einem Interferometer überlagert, wodurch ein Interferenzsignal erzeugt wird. Aus dem Interferenzsignal lässt sich die Struktur bzw. das Bild des erfassten Objekts entlang der optischen Achse (also der Tiefe des Objekts) rekonstruieren.

In OCT-Bildern, die beispielsweise wie oben vereinfacht dargestellt erzeugt werden, werden die Strahlengänge innerhalb des zu erfassenden Objekts wegen eines grösseren Brechungsindexes als der der Luft verlängert abgebildet. Zusätzlich erscheint das Ergebnis der Messung entlang des Strahlengangs im OCT-Bild gerade, obwohl der Strahlengang in Wirklichkeit, wegen der Brechung an verschiedenen Schichtgrenzen bzw. Schichtübergängen des Objekts mit unterschiedlichen Brechungsindizes, jeweils Ablenkungen erfährt. Je größer die Unterschiede der Brechungsindizes der einzelnen Materialien der Schichten des Objekts in Bezug auf den Brechungsindex *n*₀ der das Objekt umgebenden Luft , desto stärker wirkt sich die verlängerte Darstellung des abzubildenden Objekts entlang der Strahlengänge innerhalb des Objekts aus und desto mehr wird der tatsächliche Strahlengang, abhängig vom Einfallswinkel, dessen gemessener Strahlengang im OCT-Bild als gerade dargestellt wird, abgelenkt. Daher erscheint das zu erfassende Objekt (oder der Teilbereich des zu erfassenden Objekts) in einem OCT-Bild verzerrt.

Bei derartigen OCT-Systemen bzw. OCT-Verfahren zur Vermessung von langgestreckten Objekten werden üblicherweise (für einen bestimmten Querschnitt) nur wenige diskrete Ausrichtungen vermessen, beispielsweise nur zwei Ausrichtungen für einen bestimmten Querschnitt erfasst bzw. herangezogen. Es handelt sich also um eine Form einer diskreten Tomographie und nicht um ein kontinuierliches Tomographieverfahren mit beispielsweise mehr als 100 oder mehr als 1000 Bildern (unter verschiedenen Winkeln). Zumindest grundsätzlich setzt die Erfindung an einem solchen diskreten Tomographieverfahren an.

Im bisherigen Stand der Technik ist der Brechungsindex des Materials des (Mess-) Objekts oder sind die Brechungsindizes der Materialien von verschiedenen Schichten des (Mess-)Objektes a priori nicht bekannt, wodurch die OCT-Bilder stets eine gewisse Verzerrung aufweisen.

Im Stand der Technik werden mitunter für die Brechungsindizes feste vorab geschätzte Werte angenommen, um die OCT-Bilder zu entzerren. A-priori-Schätzungen haben sich bisher allerdings als zu ungenau erwiesen, auch weil sich der Brechungsindex durch zeitabhängige Materialeigenschaften (z.B. wegen Zusammensetzungs-, Temperatur- und Dichte-Unterschieden) ändern kann, wodurch die rekonstruierten Bilder des Objektes aus den gemessenen OCT-Bildern weiterhin verzerrungsbehaftet sein können.

Ohne eine möglichst präzise und regelmäßig aktualisierte Angabe der Brechungsindizes ist es somit weiterhin nicht möglich, den Objekt-Querschnitt von Messobjekten im Messfeld verzerrungsarm (bzw. annähernd verzerrungsfrei) zu rekonstruieren.

Die Publikation Zhou, K.C., Qian, R., Degan, S. et al. Optical coherence refraction tomography. Nat. Photonics 13, 794-802 (2019) offenbart die Korrektur von geometrischen Verzerrungen in OCT-Bildern, die durch unbekannte Brechungsindizes entstehen, wobei Aufnahmen aus sehr vielen verschiedenen Winkeln genutzt werden, um durch einen Algorithmus den Brechungsindex zu bestimmen und die Bilder zu korrigieren.

Der Erfindung liegt daher die Aufgabe zu Grunde, die oben genannten Nachteile aus dem Stand der Technik zu vermindern und ein Verfahren und eine Vorrichtung bereitzustellen, das/die es ermöglicht, (insbesondere kontinuierlich) ein verzerrungsarmes, vorzugsweise annähernd verzerrungsfreies, Rekonstruktionsbild zumindest eines Teilbereichs eines zu erfassenden (Mess-)Objekts zu erzeugen.

Die Aufgabe wird insbesondere durch ein Verfahren zum Entzerren (bzw. des Entzerrens) von Bildern eines lang gestreckten Objekts, die insbesondere mittels eines optischen Kohärenztomographie-Verfahrens erzeugt werden, gemäß Anspruch 1 gelöst.

Insbesondere wird die Aufgabe gelöst durch ein (computerimplementiertes) Verfahren zum Entzerren von Bildern eines, insbesondere langgestreckten, vorzugsweise transluzenten, Objekts, die insbesondere mittels eines optischen Kohärenztomographie-Verfahrens erzeugt werden, wobei das langgestreckte Objekt mindestens 5-mal so lang wie breit ist, wobei das Verfahren folgende Schritte umfasst:
a) einen Erfassungsschritt, in dem mindestens ein Bereich des Objekts in mindestens einer ersten Ausrichtung in einem ersten Bild und in mindestens einer zweiten, insbesondere unterschiedlichen, Ausrichtung in einem zweiten Bild, vorzugsweise mittels eines optischen Kohärenztomographie-Verfahrens, erfasst wird, wobei der mindestens eine Bereich (ROI) insgesamt aus höchstens 10 Ausrichtungen erfasst wird; sowie
b) einen Bestimmungsschritt, wobei anhand der erfassten Bilder Rekonstruktionsbilder des Bereichs erzeugt werden, wobei mindestens ein Brechungsindex für jede einer Vielzahl von Schichten des Objekts anhand von, insbesondere räumlichen, Rekonstruktionsabweichungen zwischen dem ersten und zweiten Rekonstruktionsbild, vorzugsweise iterativ, bestimmt wird; sowie
c) einen Entzerrungsschritt, wobei anhand der bestimmten Brechungsindizes ein entzerrtes Gesamt-Rekonstruktionsbild berechnet wird.

Ein Kerngedanke der Erfindung beruht darauf, dass durch das Bestimmen der Brechungsindizes der einzelnen Schichten eines Objekts - beispielsweise mindestens ein Brechungsindex für jede Schicht - es ermöglicht wird, ein entzerrtes Gesamt-Rekonstruktionsbild eines, beispielsweise mit einem OCT-Verfahren, erfassten Objekts zu berechnen.

Das optische Kohärenztomographie-Verfahren kann das Aussenden und Empfangen bzw. Erfassen von Licht, insbesondere Infrarot-Licht, umfassen. Für das Bestimmen der Brechungsindizes der einzelnen Schichten eines Objekts wird zunächst zumindest ein Bereich des Objekts aus mehreren (unterschiedlichen) Ausrichtungen erfasst. Aus den Bildern, in denen der Bereich des Objekts aus mehreren (unterschiedlichen) Ausrichtungen erfasst wurde, werden entsprechende Rekonstruktionsbilder erzeugt. Anschließend werden die zwischen den entsprechenden Rekonstruktionsbildern vorhandenen (räumlichen) Rekonstruktionsabweichungen berechnet und mit den berechneten Rekonstruktionsabweichungen kann mindestens ein Brechungsindex für jede Schicht der Vielzahl von Schichten, die das Objekt aufweisen kann, bestimmt werden, für den die Rekonstruktionsabweichungen minimal sind. Dieser bestimmte Brechungsindex entspricht zumindest im Wesentlichen dem tatsächlichen Brechungsindex des Materials der jeweiligen Schicht.

Unter einer Ausrichtung ist insbesondere eine Richtung bzw. Winkel zu verstehen, unter der (bzw. dem) das (langgestreckte) Objekt erfasst wird (mittels einer Erfassungseinrichtung). Insbesondere kann also eine Ausrichtung dadurch geändert werden (bzw. dadurch variieren), dass das zu vermessende Objekt gedreht wird und/oder eine Erfassungseinrichtung hinsichtlich ihrer Orientierung geändert wird und/oder mehrere Erfassungseinrichtungen unter verschiedenem Winkel angeordnet werden.

Wie bereits weiter oben im Zusammenhang mit dem Stand der Technik erläutert, setzt die Erfindung insbesondere bei an sich bekannten diskreten Tomographieverfahren an, bei denen nur wenige Ausrichtungen (z. B. 2, 3, 4, 5, oder mehr, jedoch insbesondere 20 oder weniger, oder 10 oder weniger, oder fünf oder weniger) Ausrichtungen vermessen werden und nicht an (in anderem technischen Zusammenhang) bekannten kontinuierlichen Tomographieverfahren mit ggf. 100 oder sogar 1000 Einzelbildern. Insofern im vorliegenden Zusammenhang mehrere Ausrichtungen herangezogen werden, hat dies insbesondere den Zweck, einen größeren Winkelbereich (bzw. Bereich des zu erfassenden Querschnittes) zu erfassen bzw. zu vermessen.

Anhand der, wie zuvor beschrieben, bestimmten Brechungsindizes der einzelnen Schichten eines Objekts kann ein verzerrungsarmes bzw. (annähernd) verzerrungsfreies Gesamt-Rekonstruktionsbild berechnet werden, wobei es sich bei dem derart entzerrten Gesamt-Rekonstruktionsbild beispielsweise um ein Querschnittsbild eines zu erfassenden Objekts handeln kann.

Sobald die Brechungsindizes der einzelnen Schichten des Objekts bestimmt sind, können nun anhand der bestimmten Brechungsindizes beispielsweise für weitere, gleichartige Objekte oder weitere Querschnitte von demselben Objekt (annähernd) verzerrungsfreie Rekonstruktionsbilder berechnet werden, wobei das Objekt nun lediglich aus einer Ausrichtungen erfasst werden kann.

Unter einem Rekonstruktionsbild (einer Rekonstruktion) kann vorzugsweise eine zwei- oder dreidimensionale Abbildung des erfassten Objektes oder zumindest eines Bereichs des Objekts verstanden werden, bei der etwaige Verzerrungen unter Annahmen verschiedener Parameter oder Variablen korrigiert worden sind. Die zwei- oder dreidimensionale Abbildung (Rekonstruktion) kann hierbei die tatsächlichen Abmessungen des erfassten Objekts aufweisen. Unter einem zweidimensionalen Rekonstruktionsbild kann insbesondere ein Querschnittsbild des zu erfassenden Objekts verstanden werden. Vorzugsweise kann unter einem dreidimensionalen Rekonstruktionsbild eine entsprechende Aneinanderreihung von mehreren Querschnittsbildern verstanden werden (z. B. mindestens oder genau zwei, oder mindestens oder genau drei, oder mindestens oder genau vier, und/oder höchstens 16 oder höchstens 8).

Bei dem zu erfassenden Objekt handelt es sich vorzugsweise um ein langgestrecktes und/oder transluzentes und/oder opakes Objekt, das mehrere Schichten aufweisen kann, die ggf. unterschiedliche Materialien mit ggf. unterschiedlichen Brechungsindizes aufweisen können. Ein derartiges Objekte kann beispielsweise gebildet werden durch: eine ein- oder mehrschichtige (Kunststoff-)Folie oder ein ein- oder mehrschichtiges (Kunststoff-) Rohr oder einen ein- oder mehrschichtiger (Kunstoff-)Schlauch.

In einem konkreten Beispiel kann es sich den langgestreckten Objekten um ein Kabel, insbesondere Glasfaserkabel oder ein (mit Kunststoffisolierungen ummanteltes) Draht, oder auch Katheter, wie beispielweise Multilumenkatheter, handeln.

Das langgestreckte Objekt ist vorzugsweise mindestens 5-mal, insbesondere mindestens 50-mal, ggf. mindestens 100-mal und/oder höchstens 10.000-mal so lang wie breit (wobei unter der Breite ein Durchmesser bzw. maximaler Durchmesser in einem bestimmten Querschnitt zu verstehen ist; sollte diese Breite über die Länge des Objektes schwanken, ist vorzugsweise ein arithmetisches Mittel heranzuziehen, vorzugsweise in Bezug auf äquidistante Querschnitte, die einen Abstand von höchstens oder genau 1/100 der Länge aufweisen). Gegebenenfalls ist die Breite des langgestreckten Objektes (zumindest im Wesentlichen) konstant.

Das langgestreckte Objekt kann (zumindest abschnittsweise, über die Länge gesehen, beispielsweise über mindestens 50% der Länge) zumindest im Wesentlichen oval (ggf. elliptisch oder kreisförmig) ausgebildet sein. Das langgestreckte Objekt kann zumindest abschnittsweise (über die Länge gesehen) innen hohl ausgebildet sein oder (zumindest abschnittsweise) nicht-hohl oder sowohl (beispielsweise in einem ersten Abschnitt) hohl als auch (in einem weiteren Abschnitt) nicht-hohl ausgebildet sein. Der Querschnitt des langgestreckten Objektes kann in Ausführungsformen (zumindest abschnittsweise) über die Länge ringförmig ausgebildet sein.

Das langgestreckte Objekt kann flexibel sein oder (zumindest im Wesentlichen) starr.

Eine Breite des langgestreckten Objektes (bei variabler Breite, vorzugsweise im Mittel) kann mindestens 0,1 mm oder mindestens 1 mm und/oder höchstens 20 mm oder höchstens 10 mm betragen.

Eine Länge des langgestreckten Objektes kann mindestens 10 mm oder mindestens 100 mm oder mindestens 1000 mm und/oder höchstens 10 m betragen.

Wenn das langgestreckte Objekt flexibel ist, kann es beispielsweise (bei einer Temperatur von 20 °C) auf einen Zylinder mit einem Durchmesser von 1 m aufgerollt werden (ohne zu zerbrechen oder sonstwie Schaden zu nehmen). Wenn das langgestreckte (zumindest im Wesentlichen) starr ist, soll dies vorzugsweise nicht möglich sein.

Es wird insbesondere angenommen, dass die Brechungsindizes der Materialien innerhalb der jeweiligen Schicht oder dem jeweiligen Bereich (ROI) zumindest im Wesentlichen konstant sind.

Vorzugsweise kann eine Rekonstruktionsabweichung lokale Abweichungen für eine Region bzw. einen Bereich (ROI) des Objekts oder eine GesamtRekonstruktionsabweichung für alle zur Verfügung stehenden Bilder beinhalten, wenn angenommen wird, dass der Brechungsindex einer Schicht überall gleich ist.

Für das Bestimmen des Gesamt-Rekonstruktionsbilds aus den verschiedenen OCT-Bildern kann der Brechungsindex des Materials des Objekts oder ggf. die Brechungsindizes der Materialien der einzelnen Schichten des Objekts bestimmt werden, wobei das Objekt, zumindest in einem (Teil-)Bereich, (annähernd) gleichzeitig und/oder zumindest überlappend erfasst bzw. vermessen wird. Das Erfassen kann beispielsweise nach einem OCT-Verfahren aus mehreren Ausrichtungen bzw. Richtungen geschehen.

In einer bevorzugten Ausführungsform werden der Erfassungsschritt und der Bestimmungsschritt jeweils periodisch wiederholt oder ereignisgesteuert durchgeführt, wobei sich vorzugsweise eine Ausführungsrate des Erfassungsschritts von einer Ausführungsrate des Bestimmungsschritts unterscheidet, sofern beide Schritte periodisch wiederholt durchgeführt werden, wodurch eine Schätzung des mindestens einen Brechungsindex der Schichten des Objekts immer wieder aktualisiert werden kann. Es wird hierdurch ermöglicht, den mindestens einen Brechungsindex der Schichten des Objekts (zumindest annähernd) kontinuierlich zu bestimmen. Des Weiteren sind auch Abläufe denkbar, bei denen ereignisgesteuert für eine vorbestimmte Dauer oder eine vorgestimmte Anzahl von Wiederholungen eine periodische Durchführung des Erfassungsschritts und des Bestimmungsschritts ausgeführt werden. Vorzugsweise findet der (Brechungsindex-)Bestimmungsschritt parallel zum Entzerrungsschritt (Rekonstruktionsschritt) und/oder Erfassungsschritt, in zwei parallelen Software-Prozessen, statt: Der Bestimmungsschritt langsamer, z.B. bei 1 Hz, der Entzerrungsschrift (Rekonstruktionsschritt) und/oder der Erfassungsschritt schneller z.B. bei 100Hz.

Im Allgemeinen kann eine Frequenz des Erfassungsschrittes und/oder des Entzerrungsschrittes mindestens 2-mal oder mindestens 5-mal oder sogar mindestens 20-mal so groß sein wie eine Frequenz des (Brechungsindex-) Bestimmungsschrittes.

Vorzugsweise sind die Frequenzen des Erfassungs- und Entzerrungsschrittes gleich oder zumindest annähernd gleich (so dass beispielsweise die Frequenz des Erfassungsschrittes mindestens 0,75-mal und höchstens 1,25-mal so groß ist, wie die Frequenz des Entzerrungsschrittes).

Die (jeweilige) Frequenz kann während der Vermessung des jeweiligen langgestreckten Objektes konstant sein oder schwanken. Wenn die Frequenz schwankt, soll zum Vergleich der jeweiligen Frequenzen miteinander ein entsprechender Mittelwert (Summe der Messvorgänge geteilt durch Gesamt-Messdauer für ein bestimmtes langgestrecktes Objekt) herangezogen werden.

Alternativ oder zusätzlich gilt für mindestens einen Zeit-Abschnitt der gesamten Vermessung des Objektes, dass in diesem mehr Erfassungs- und/oder Entzerrungsschritte durchgeführt werden als (Brechungsindex-)Bestimmungsschritte.

In Ausführungsformen wird das langgestreckte Objekt zwischen zwei Erfassungsschritten zumindest abschnittsweise fortbewegt (beispielsweise kontinuierlich und/oder mit konstanter Geschwindigkeit, ggf. auch in diskreten Schritten) derart, dass durch die mehreren Erfassungsschritte der Querschnitt des langgestreckten Objektes an verschiedenen Stellen erfasst werden kann. Beispielsweise bei der Vermessung eines Kabels kann dieses (ggf. bei einem Herstellungsverfahren oder auch danach, beispielsweise durch Abspulen aus einem aufgewickelten Zustand) an verschiedenen Stellen hinsichtlich seines Querschnittes erfasst werden. Insbesondere in einem solchen Zusammenhang ist beispielsweise eine periodische Wiederholung des Erfassungsschrittes vorteilhaft, beispielsweise mit einer Frequenz von mindestens 0,1 Hertz, ggf. mindestens 1 Hertz und/oder höchstens 100 Hertz.

Eine ereignisgetriebene Durchführung des jeweiligen Schrittes kann beispielsweise dann sinnvoll sein, wenn aufgrund anderer Messungen oder eines sonstigen Inputs festgestellt wird, dass (beispielsweise bei einem fortlaufenden Kabel oder dergleichen) eine Veränderung zu erwarten ist.

Vorzugsweise wird der Bestimmungsschritt weniger häufig durchgeführt als der Erfassungsschritt (und/oder Entzerrungsschritt), wobei ausgenutzt wird, dass mit vergleichsweise hoher Wahrscheinlichkeit davon auszugehen ist, dass sich die Brechungsindizes, die in einem bestimmten Durchlauf des Bestimmungsschrittes festgestellt wurden, beispielsweise an einem anderen Querschnitt des langgestreckten Objektes gleich bleiben, während sich die Geometrie des langgestreckten Objektes ändern kann. Insgesamt kann dadurch auf besonders effektive Art und Weise Rechenaufwand eingespart werden.

Im Allgemeinen ist es bevorzugt, wenn der Erfassungsschritt (und/oder Entzerrungsschritt) an mindestens 2 oder mindestens 4 oder mindestens 10 oder mindestens 20 und/oder höchstens 1000 verschiedenen Querschnitten des langgestreckten Objektes durchgeführt wird (über die Länge des langgestreckten Objektes betrachtet), um das Objekt hinsichtlich eines Querschnittes der Länge nach zu erfassen bzw. zu überprüfen.

Alternativ oder zusätzlich ist es denkbar, dass die bestimmten Brechungsindizes in einer Datenstruktur gespeichert werden, wobei die gespeicherten Brechungsindizes der einzelnen Schichten des Objekts als Ausgangswerte bei einem erneuten Durchführen des Bestimmungsschritts bei beispielsweise weiteren Bereichen des Objekts oder weiteren Objekten dienen kann.

Vorzugsweise wird für jede der Schichten des Objekts der mindestens eine Brechungsindex mit einem Optimierungsverfahren bestimmt, indem insbesondere eine aus den, vorzugsweise räumlichen, Rekonstruktionsabweichungen berechnete Zielfunktion minimiert wird. Hierdurch kann auf vergleichsweise rechenleistungssparende Weise mindestens ein Brechungsindex bestimmt bzw. geschätzt werden, der die Rekonstruktionsabweichungen zwischen den entsprechenden Rekonstruktionsbildern minimiert.

In einer Ausführungsform handelt es sich bei der aus den, vorzugsweise räumlichen, Rekonstruktionsabweichungen berechneten Zielfunktion um eine mehrdimensionale Zielfunktion. Für die mehrdimensionale Zielfunktion kann mit dem Optimierungsverfahren (direkt) ein Satz von Brechungsindizes für die Schichten des Objekts bestimmt werden, der die mehrdimensionale Zielfunktion minimiert. Hierdurch kann das komplexere Optimierungsproblem direkt gelöst werden, wodurch ein sukzessives (schichtweises) Vorgehen vermieden werden kann.

Vorzugsweise wird zuerst der mindestens eine Brechungsindex der ersten an eine Oberfläche des Objekts angrenzenden Schicht mit einem Optimierungsverfahren bestimmt, da der Brechungsindex des Mediums, das das zu erfassende Objekt umgibt, a priori (hinreichend) bekannt ist.

Es wird bevorzugt, dass der mindestens eine Brechungsindex ausgehend von der ersten Schicht sukzessive für jede weitere Schicht, die insbesondere an die erste Schicht bzw. eine jeweils vorangehende Schicht angrenzt, mit einem Optimierungsverfahren bestimmt wird. Hierdurch kann das Optimierungsverfahren für jede einzelne Schicht nacheinander ausgeführt werden, wodurch die Schätzungen der Brechungsindizes der einzelnen Schichten besonders präzise ermittelt werden können. Insbesondere ist das Ergebnis für die Bestimmung des Brechungsindex oder der Brechungsindizes der jeweils tiefer gelegenen Schicht des Objektes von dem Ergebnis für die vorhergehende (näher an der Oberfläche des Objekts gelegeneren) Schicht abhängig.

Insbesondere werden die räumlichen Rekonstruktionsabweichungen berechnet, indem die räumlichen Abstände zwischen einer Vielzahl von Punkten einer Grenzfläche einer Schicht, deren Positionen anhand des ersten Rekonstruktionsbildes berechnet werden, mit einer Vielzahl von Punkten der Grenzfläche der Schicht, deren Positionen anhand des zweiten Rekonstruktionsbildes und/oder mindestens eines weiteren Rekonstruktionsbildes, vorzugsweise aller (vorhandenen) Rekonstruktionsbilder, berechnet werden, bestimmt werden, wobei die Zielfunktion insbesondere als Summe der räumlichen Abstände berechnet wird. Insbesondere kann unter den räumlichen Abständen jede (gewichtete) Norm, die eine Abweichung von mindestens zwei Punkten beschreibt, verstanden werden. Vorzugsweise wird die Zielfunktion als Summe der Quadrate der räumlichen Abstände berechnet. Insbesondere werden hierbei die kleinsten (räumlichen) Abstände eines Punktes mit sämtlichen rekonstruierten Punkten aus einem anderen rekonstruierten Bild (weiteren Rekonstruktionsbild) bestimmt und aufsummiert. Derart kann für jeden Punkt ein (räumlicher) Abstand zu jedem der weiteren Rekonstruktionsbilder berechnet werden.

Hierdurch kann auf einfache Weise eine Zielfunktion erhalten werden, anhand der mindestens ein Brechungsindex ermittelt werden kann, bei dem die räumlichen Rekonstruktionsabweichungen der entsprechenden Rekonstruktionsbilder, die auf aus unterschiedlichen Ausrichtungen bzw. Richtungen aufgenommenen Bildern basieren, minimiert werden.

Vorzugsweise wird der mindestens eine Brechungsindex für jede der Schichten mit einem Rastersuche-Verfahren bestimmt, der die Zielfunktion minimiert. Mit dem Rastersuche-Verfahren, das sich insbesondere dadurch auszeichnet, dass es auch bei geringem Anspruch an die benötigten Algorithmen in vergleichsweise kurzer Zeit zu einem (zumindest annähernd) optimalen Ergebnis konvergieren kann, kann auf eine vergleichsweise einfache Weise die Zielfunktion minimiert werden.

In einer Ausführungsform wird der mindestens eine Brechungsindex für jede der Schichten mit einem Zufallssuche-Verfahren bestimmt, wobei ein Brechungsindex aus einem Satz von vorab und/oder laufend festgelegten Brechungsindizes derart ausgewählt wird, dass die Zielfunktion minimiert wird. Hierdurch wird einerseits der Lösungsraum des Optimierungsverfahrens weiter eingeschränkt, wodurch die benötigte Rechenleistung und die benötigte Zeit, die das Optimierungsverfahren zum konvergieren braucht, verringert werden kann. Andererseits können hierdurch auch globale Optima für den mindestens einen Brechungsindex in der Zielfunktion bestimmt werden.

Es wird bevorzugt, dass der mindestens eine Brechungsindex für jede der Schichten mit einem Gradienten-Verfahren bestimmt wird, der die Zielfunktion minimiert, wodurch ein besonders präzises Ergebnis für den ermittelten mindestens einen Brechungsindex, der ein (zumindest lokales) Optimum (Minimum) in der Zielfunktion darstellt, bestimmt wird. Unter Gradienten-Verfahren können hierbei Optimierungsverfahren verstanden werden, bei denen iterativ (schrittweise) mindestens ein Parameter (mindestens ein Brechungsindex) und/oder Parameterset gesucht und ermittelt wird, der/das die Zielfunktion minimiert. Die Richtung, die in jedem Schritt dieses Verfahrens verwendet wird, wird insbesondere durch die (ggf. negative) Richtung des Gradienten (der ersten Ableitung der Zielfunktion) im aktuellen Parameterpunkt des aktuellen Schritts erhalten (Steepest-Descent-Verfahren). Des Weiteren kommen auch weitere, mitunter komplexere, gradientenbasierte Verfahren in Frage, wie beispielsweise das Newton-Verfahren, bei dem zusätzlich zu der ersten Ableitung der Zielfunktion auch die zweite Ableitung der Zielfunktion für die Bestimmung der Richtung im aktuellen Parameterpunkt des aktuellen Schritts verwendet wird. Selbstverständlich sind weitere andere Optimierungsverfahren, wie sie in der numerischen Mathematik bekannt sind, denkbar.

In einer weiteren Ausführungsform wird im Erfassungsschritt der Bereich in einer Vielzahl von weiteren, insbesondere unterschiedlichen, Ausrichtungen in einer Vielzahl von weiteren Bildern aufgenommen.

Insbesondere wird im Bestimmungsschritt anhand der erfassten Vielzahl von weiteren Bildern eine Vielzahl von entsprechenden Rekonstruktionsbildern des Bereichs bzw. der Bereiche erzeugt, und die Brechungsindizes werden anhand von, insbesondere räumlichen, Rekonstruktionsabweichungen zwischen/unter der Vielzahl von entsprechenden Rekonstruktionsbildern, vorzugsweise iterativ, bestimmt.

Insbesondere können hierdurch die Auswirkungen von Rauscheffekten, mit denen die Rekonstruktionsbilder behaftet sein können, weiterhin verringert werden. Darüber hinaus können beispielsweise weitere Messungenauigkeiten sowie Nichtlinearitäten oder Abtastungsfehler berücksichtigt und verringert werden.

In einer weiteren Ausführungsform wird der Erfassungsschritt für einen oder eine Vielzahl von weiteren, sich insbesondere untereinander zumindest teilweise überlappenden, Bereichen des Objekts durchgeführt, wobei jeder der weiteren Bereiche des Objekts aus zumindest zwei unterschiedlichen Ausrichtungen bzw. Richtungen erfasst wird, und wobei im Bestimmungsschritt für jeden Bereich des Objekts, der aus mindestens zwei Ausrichtungen erfasst ist, die Brechungsindizes der Materialien der Schichten des Objekts bestimmt wird.

Vorzugsweise können hierdurch mehrere Bereiche des Objekts zusammengefasst werden, so dass redundante Informationen zur Bestimmung des Brechungsindex oder der Brechungsindizes (beispielsweise für eine Vielzahl von Schichten des Objekts) vorliegen, anhand denen ein Satz von (iterativ) bestimmten Brechungsindizes (beispielsweise für eine Vielzahl von Schichten des Objekts) bestimmt werden kann. Mit dem Satz von Brechungsindizes kann (anschließend) ein entzerrtes (Gesamt-) Rekonstruktionsbild berechnet werden.

Beispielsweise kann es bei Objekten, von denen mehrere Bereiche auch aus mehreren, unterschiedlichen Ausrichtungen erfasst werden, jedoch vorkommen, dass es zum Beispiel aufgrund der Form des Objektes und/oder aufgrund der Anordnung von Objekt und Erfassungseinheit nicht möglich ist, dass sich alle Bilder in einem Bereich überlappen. In diesen Fällen ist es denkbar, dass zunächst eine (lokale) Rekonstruktionsabweichung nur für die Bereiche durchgeführt wird, in denen sich zumindest zwei Rekonstruktionsbilder in einem gemeinsamen Bereich überlappen. Anhand dieser Information, also der lokal bestimmten Rekonstruktionsabweichungen, kann die Gesamtrekonstruktionsabweichung als Summe der lokalen Rekonstruktionsabweichungen minimiert werden, und dann die Brechungsindizes bestimmt werden und schließlich mit allen Bildern (überlappend oder nicht) ein (entzerrtes) Gesamt-Rekonstruktionsbild ermittelt werden.

Zusätzlich oder alternativ kann es hierdurch möglich sein, eine Gesamtzielfunktion anhand der Rekonstruktionsabweichungen der einzelnen Bereiche (also dem Bereich und den weiteren Bereichen) des Objekts zu konstruieren. Die Gesamtzielfunktion kann sukzessive für jede der Vielzahl von Schichten des Objekts, wie beispielsweise oben beschrieben wurde, mit einem (iterativen) Optimierungsverfahren, wie beispielsweise einem Rastersuche-Verfahren, einem Zufallssuche-Verfahren oder einem Gradienten-Verfahren, minimiert werden, wodurch die Präzision der Bestimmungen (Schätzungen) der Brechungsindizes weiter erhöht werden kann. Darüber hinaus können insbesondere die Auswirkungen von Rauscheffekten, die auf einen Bereich des Objektes lokal beschränkt sind, auf die Bestimmung der Brechungsindizes reduziert werden. Vorzugsweise weist der Winkel zwischen der ersten Ausrichtung und der zweiten Ausrichtung einen Wert zwischen 10° und 120°, insbesondere zwischen 45° und 90°, vorzugsweise zumindest etwa 90°, auf. Hierdurch kann ein großer Parallaxenwinkel zwischen dem ersten und zweiten Bild und damit zwischen den entsprechenden Rekonstruktionsbildern erreicht werden, wodurch die Rekonstruktionsabweichungen besser berechnet werden können.

Insbesondere weist ein Winkel zwischen der Vielzahl von weiteren Ausrichtungen jeweils einen Wert zwischen 40° und 100°, insbesondere zwischen 50° und 80°, vorzugsweise zumindest etwa 60°, auf. Insbesondere sind die Vielzahl von weiteren Ausrichtungen äquidistant über den gesamten Winkelbereich (beispielsweise zumindest in etwa 180° und/oder 360°) des Messfelds verteilt. Hierdurch kann eine verbesserte Winkelauflösung erreicht werden.

Für die beiden in den vorangehenden Absätzen genannten Winkelbereiche gilt vorzugsweise, dass der jeweils angegebene Winkel einen Unterschied zwischen zwei Ausrichtungen betrifft, in dem keine weitere Ausrichtung im Rahmen einer Messung eingestellt wird (ist) bzw. vorliegt, es sich also vorzugsweise immer um die (winkelmäßig) nächste Ausrichtung handelt. Wenn also beispielsweise angegeben ist, dass ein Winkel zwischen der ersten Ausrichtung und der zweiten Ausrichtung (zumindest etwa) 90° aufweist, soll dies vorzugsweise bedeuten, dass keine Messung bei einem Winkel zwischen 0 und 90° erfolgt.

Generell kann eine Messung (bzw. Erfassung) in (bzw. unter) mindestens oder genau zwei, oder mindestens oder genau drei, oder mindestens oder genau vier, und/oder höchstens oder genau 16, oder höchstens oder genau acht, Ausrichtungen erfolgen.

Alternativ oder zusätzlich kann eine Erfassung (bzw. Messung) in Bezug auf mehrere Ausrichtungen einen Erfassungsbereich von mindestens 90°, vorzugsweise mindestens 180°, ggf. 270° oder (zumindest annähernd) 360° abdecken. Unter einer Abdeckung in diesem Sinne ist insbesondere eine Summe der Winkel zwischen einer ersten Ausrichtung und der dieser nächsten Ausrichtung (bzw. zweiten Ausrichtung) und deren nächster (winkelmäßig gesehen) Ausrichtung zu verstehen. Ein Erfassungsbereich von 270° kann beispielsweise dadurch gebildet werden, dass zwischen einer ersten und einer zweiten Ausrichtung ein Winkel von 40°, zwischen einer zweiten und einer dritten Ausrichtung ein Winkel von 80° und zwischen einer dritten und vierten Ausrichtung ein Winkel von 150° vorliegt (oder auch dass vier Ausrichtungen vorliegen, die jeweils einen Winkelabstand von 90° zueinander aufweisen).

In Ausführungsformen kann das langgestreckte Objekt beispielsweise unter einer ersten Richtung und einer zweiten (genau gegenüberliegenden bzw. entgegen gerichteten) Richtung bzw. Ausrichtung erfasst werden. Insbesondere ist eine Anordnung zur Erfassung so gewählt, dass das zu erfassende (langgestreckte) Objekt aus allen Richtung bzw. in allen Ausrichtungen erfasst werden kann (eine entsprechende Erfassungsmöglichkeit also zumindest vorhanden ist).

Die Aufgabe der Erfindung wird darüber hinaus durch ein computerlesbares Medium gelöst, umfassend eine Vielzahl von Anweisungen, die, wenn sie von mindestens einem Prozessor ausgeführt werden, bewirken, dass der Prozessor das Verfahren der obigen Art ausführt.

Des Weiteren wird die Aufgabe der Erfindung gelöst durch eine Vorrichtung zum Entzerren von Bildern eines Objekts, insbesondere nach der obigen Art, wobei die Vorrichtung folgendes ausweist:
- mindestens eine Erfassungseinheit, die dazu ausgebildet ist, mindestens einen Bereich des Objekts, insbesondere mittels eines optischen Kohärenztomographie-Verfahrens, in mindestens einer ersten Ausrichtung in einem ersten Bild und in mindestens einer zweiten, insbesondere unterschiedlichen, Ausrichtung in einem zweiten Bild, zu erfassen;
- mindestens eine Recheneinheit, die mit der Erfassungseinheit verbunden und dazu ausgebildet ist,
   o anhand der erfassten Bilder entsprechende Rekonstruktionsbilder des Bereichs zu erzeugen, wobei mindestens ein Brechungsindex für jede einer Vielzahl von Schichten des Objekts anhand von, insbesondere räumlichen, Rekonstruktionsabweichungen zwischen dem ersten und zweiten Rekonstruktionsbild, vorzugsweise iterativ, bestimmt wird; sowie
   o anhand der bestimmten Brechungsindizes ein entzerrtes Rekonstruktionsbild zu berechnen.

Die erfindungsgemäße Vorrichtung weist die Vorteile auf, die bereits in Bezug auf das Verfahren zum Entzerren von Bildern eines Objekts beschrieben wurden.

Die in dem Zusammenhang mit dem Verfahren zum Entzerren von Bildern eines Objekts beschriebenen Merkmale und damit verbundenen Vorteile sind auch mit der erfindungsgemäßen Vorrichtung kombinierbar und können insbesondere als entsprechende Konfiguration der Vorrichtung, insbesondere der Recheneinheit, umgesetzt sein.

Die Aufgabe der Erfindung wird ferner gelöst durch ein System zum Entzerren von Bildern eines Objekts, umfassend eine Vorrichtung der obigen Art, die insbesondere dazu ausgebildet ist, das Verfahren nach der obigen Art durchzuführen, sowie mindestens ein langgestrecktes Objekt.

Weitere Ausführungsformen ergeben sich aus den Unteransprüchen.

Nachfolgend wird die Erfindung anhand von nicht einschränkenden Ausführungsbeispielen unter Bezug auf die beigefügten Zeichnungen weiter erläutert. Hierbei zeigen:
- Fig. 1: eine schematische Darstellung eines einzelnen Lichtstrahls, der auf ein zu erfassendes Objekt trifft;
- Fig. 2: eine schematische Darstellung eines Ausführungsbeispiels der erfindungsgemäßen Vorrichtung;
- Fig. 3: ein Ablaufdiagramm eines Ausführungsbeispiels des erfindungsgemäßen Verfahrens;
- Fig. 4A: eine schematische Darstellung (Bild) der einzelnen Strahlen (als gerade Linien dargestellt), wie sie von einer OCT-Messung aus Richtung der X-Achse geliefert werden;
- Fig. 4B: eine schematische Darstellung (Bild) der einzelnen Strahlen (als gerade Linien dargestellt), wie sie von einer OCT-Messung aus Richtung der Y-Achse geliefert werden;
- Fig. 5A: eine Rekonstruktion, ausgehend vom Bild aus Fig. 4A, von Punkten aus Richtung der X-Achse mit einem Brechungsindex von *n*₁ = 1,3 eines Querschnitts eines zu erfassenden Objekts;
- Fig. 5B: eine Rekonstruktion ausgehend vom Bild aus Fig. 4B, von Punkten aus Richtung der Y-Achse mit einem Brechungsindex von *n*₁ = 1,3 eines Querschnitts eines zu erfassenden Objekts;
- Fig. 5C: eine Überlagerung der Rekonstruktionen von den Punkten aus Richtung der X-Achse und Y-Achse mit einem Brechungsindex von *n*₁ = 1,3 eines Querschnitts eines zu erfassenden Objekts;
- Fig. 6A: eine Rekonstruktion von Punkten aus Richtung der X-Achse mit einem Brechungsindex von *n*₁ = 1,7 eines Querschnitts eines zu erfassenden Objekts;
- Fig. 6B: eine Rekonstruktion von Punkten aus Richtung der Y-Achse mit einem Brechungsindex von *n*₁ = 1,7 eines Querschnitts eines zu erfassenden Objekts;
- Fig. 6C: eine Überlagerung der Rekonstruktionen von den Punkten aus Richtung der X-Achse und Y-Achse mit einem Brechungsindex von *n*₁ = 1,7 eines Querschnitts eines zu erfassenden Objekts;
- Fig. 7A: eine Rekonstruktion von Punkten aus Richtung der X-Achse mit einem Brechungsindex von *n*₁ = 1,5 eines Querschnitts eines zu erfassenden Objekts;
- Fig. 7B: eine Rekonstruktion von Punkten aus Richtung der Y-Achse mit einem Brechungsindex von *n*₁ = 1,5 eines Querschnitts eines zu erfassenden Objekts;
- Fig. 7C: eine Überlagerung der Rekonstruktionen von den Punkten aus Richtung der X-Achse und Y-Achse mit einem Brechungsindex von *n*₁ = 1,5 eines Querschnitts eines zu erfassenden Objekts; und
- Fig. 8: eine schematische Darstellung eines Querschnitts eines zu erfassenden Objekts.

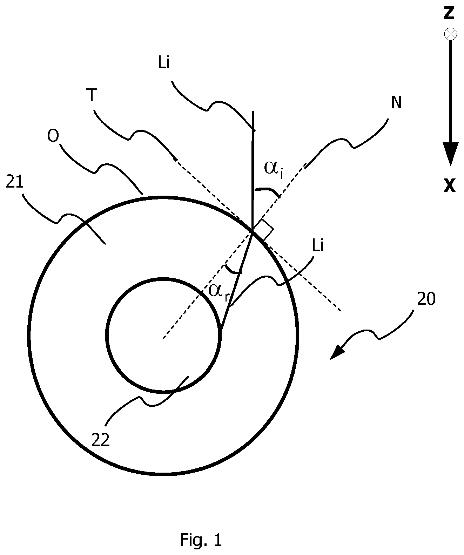

**In** **Fig. 1** **ist** beispielhaft ein zu erfassendes (Mess-)Objekt 20 in einem Messfeld abgebildet. In dem vorliegenden Beispiel handelt es sich um ein (sich in Z-Richtung langgestrecktes ausdehnendes) Objekt 20, das zumindest im Wesentlichen eine runde Querschnittsfläche und eine äußere Schicht 21 sowie eine innere Schicht 22 aufweist. Denkbar sind natürlich ebenfalls beliebige andere Querschnittsformen, wie oval, rechteckig quadratisch oder vieleckig.

Im vorliegenden Ausführungsbeispiel kann das Objekt 20 beispielsweise einen Durchmesser von 0,5 mm bis 10,0 mm aufweisen, wobei die einzelnen Schichtdicken des Objekts 20 beispielsweise einen Wert aufweisen können, der kleiner als 8,0 mm, vorzugsweise kleiner als 5,0 mm sein kann.

In dem abgebildeten Beispiel trifft ein Lichtstrahl Li auf die Oberfläche O des Objekts 20.

Der eintreffende Lichtstrahl Li ist in Fig. 1 aus der Richtung der X-Achse auf die Oberfläche O eines Messobjekts 20 im Messfeld gerichtet.

Durch eine Interpolation der Punkte auf der Oberfläche O, die auf beiden Seiten des Einfallpunktes angrenzen, ist es beispielsweise möglich, die Tangente T und daraus die Normale N am Einfallpunkt zu bestimmen, welche rechtwinklig zur Tangente T steht.

Der Winkel zwischen der Normalen N und Lichtstrahl Li ist der Einfallswinkel *α*_{*i*,0}. Hierbei ist *n*₀ der Brechungsindex des Materials außerhalb des Objekts (normalerweise Luft). Der Brechungsindex *n*₁ ist der Brechungsindex der ersten Schicht 21 des Objekts 20.

Der Brechungswinkel *α*_{*r*,1} des Lichtstrahls Li im Inneren des Objekts 20 kann dann nach dem Gesetz von Snellius mit der nachfolgenden Gleichung berechnet werden: ${n}_{0} ⋅ sin \left({α}_{i , 0}\right) = {n}_{1} ⋅ sin \left({α}_{r , 1}\right) .$

Der Lichtstrahl Li durchläuft die erste Schicht 21 innerhalb des Objekts 20, solange bis er entweder von der Oberseite der nächsten Schicht 22 oder von einer nachfolgenden Oberfläche einer anderen Schicht innerhalb des Objekts 20 reflektiert oder gebrochen wird. Die vom Lichtstrahl Li im Inneren des Objekts 20 zurückgelegte Entfernung wird als Weglänge Δ*l* bezeichnet.

Die Weglänge Δ*l,* die der Lichtstrahl Li innerhalb des Objekts 20 zurücklegt, kann durch ein OCT- Verfahren bestimmt werden. Aufgrund der reduzierten Ausbreitungsgeschwindigkeit des Lichtstrahles im Medium mit Brechungsindex *n*₁ *> n*₀ ist im vorliegenden Beispiel die vom OCT-Verfahren gemessene Weglänge Δ*lm* jedoch länger als die tatsächliche Weglänge Δ*lr* zwischen den Oberflächen der Schichten 21, 22.

Die tatsächliche Weglänge Δ*lr* zwischen der äußeren und ersten inneren Schicht 21, 22 des Objekts 20 kann mit dem OCT-Verfahren anhand der gemessene Weglänge Δ*lm* durch die folgenden Gleichung bestimmt werden: $Δ lr = \frac{Δ lm}{{n}_{1}} {n}_{0} .$

Durch Messen der Weglänge Δ*lm* des Lichtstrahls Li aus einer bestimmten Richtung (aus Richtung der X-Achse) an verschiedenen Punkten der Außenfläche O kann ein Querschnitt der aus der X-Richtung betrachteten Innenfläche rekonstruiert werden.

Für die Rekonstruktion ist allerdings zusätzlich zu der gemessenen Weglänge Δ*lm,* die durch das OCT-Verfahren erhalten wird, und dem Einfallswinkel *α*_{*i*,0} des Lichtstrahls L, der aus dem OCT-Bild ermittelt werden kann, auch Kenntnis über **den Brechungsindex** *n*₁ notwendig. Da der Brechungsindex *n*₁ im Vorhinein nicht bekannt ist, wird im Stand der Technik ein fester Schätzwert, welcher z.B. aus Labormessungen stammt, verwendet.

Nach der Bestimmung des Querschnitts der ersten inneren Schicht 21 können die nachfolgenden inneren Schichten (Schicht 22 in Fig. 1) nach dem oben beschriebenen Vorgehen rekonstruiert werden. Die erste innere Schicht 21 wird nun als die äußere Schicht betrachtet.

Indem die optische Vorrichtung so ausgelegt ist, dass alle Punkte aller Schichtgrenzen von mindestens einem Strahl einer Achse gemessen werden, kann der gesamte Querschnitt des Objekts rekonstruiert werden.

Wie bereits erwähnt ist in der Praxis der Brechungsindex *n*₁ der Materialien im Messobjekt 20 nicht a priori bekannt. Ohne die Angabe der Brechungsindizes ist es nicht möglich, den Querschnitt des Messobjekts 20 im Messfeld zumindest im Wesentlichen verzerrungsfrei nachzubilden (zu rekonstruieren).

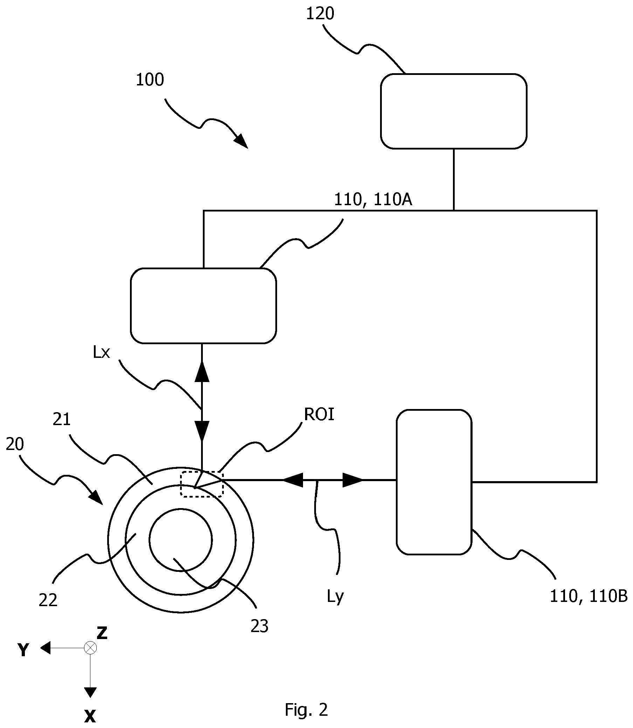

In Fig. 2 zeigt ein Ausführungsbeispiel einer erfindungsgemäßen Vorrichtung 100 zum Entzerren von Bildern eines langgestreckten, transluzenten Objekts 20. Das in Fig. 2 abgebildete Objekt 20 weist drei Schichten 21, 22 und 23 auf.

Das Objekt 20 weist einen zumindest im Wesentlichen runden Querschnitt (in X- und Y-Richtung) auf und ist in Z-Richtung langgestreckt ausgebildet.

Darüber hinaus ist in Fig. 2 ein Bereich von Interesse (ROI) gestrichelt umrandet abgebildet. Die Vorrichtung 100 weist eine Erfassungseinheit 110 auf, die dazu ausgebildet ist, das Objekt 20 nach einem optischen Kohärenztomographie-Verfahren in X-Richtung in einem ersten Bild und in Y-Richtung in einem zweiten Bild zu erfassen. Die eintreffenden und reflektierten Lichtstrahlen Lx, Ly, die von der Erfassungseinheit 110 zum Erfassen des Bereichs ROI abgestrahlt und empfangen werden können, sind in Fig. 2 als Doppelpfeile dargestellt.

In Fig. 2 besteht die Erfassungseinheit 110 aus zwei Erfassungsmodulen 110A und 110B, die so ausgerichtet sind, dass ein Bereich ROI des Objekts 20 (annähernd) gleichzeitig aus unterschiedlichen Richtungen (Ausrichtungen γ1 und γ2 ), **also** der Richtung der X-Achse für Erfassungsmodul 110A und der Richtung der Y-Achse für Erfassungsmodul 110B, erfasst werden. Der Winkel zwischen den Erfassungsmodulen beträgt in dem Ausführungsbeispiel 90°. Es ist ebenfalls möglich, dass die Erfassungseinheit eine Vielzahl von Erfassungsmodulen umfasst (nicht abgebildet).

Darüber hinaus wäre eine Erfassungseinheit 110 denkbar, die nur ein Erfassungsmodul aufweist, das derart rotiert und/oder verschoben werden kann, dass der Bereich ROI aus mehreren (unterschiedlichen) Richtungen erfasst werden kann.

Des Weiteren kann in diesem Ausführungsbeispiel die Erfassungseinheit 110 derart bewegt werden, dass weitere (sich ggf. überlappende) Bereiche des Objektes 20 erfasst werden können.

Die Erfassungseinheit 110 ist kommunikativ mit einer Recheneinheit 120 verbunden. Die Recheneinheit 120 ist dazu ausgebildet, anhand der erfassten Bilder entsprechende Rekonstruktionsbilder des Bereichs ROI zu erzeugen.

In diesem Ausführungsbeispiel werden nun räumliche Rekonstruktionsabweichungen zwischen einer Vielzahl von Punkten in den entsprechenden Rekonstruktionsbildern berechnet. Anhand der bestimmten Rekonstruktionsabweichungen wird nun für jede Schicht 21, 22 und 23 des Objekts 20 ein Brechungsindex *n*₁, *n*₂ und *n*₃ bestimmt.

Anhand der bestimmten Brechungsindizes *n*₁, *n*₂ und *n*₃ wird nun ein entzerrtes Gesamtrekonstruktionsbild berechnet. Die Recheneinheit 120 kann ferner eine oder mehrere Speichereinheiten sowie eine oder mehrere Schnittstellen aufweisen, mit denen es ermöglicht wird, die berechneten Brechungsindizes und/oder das entzerrte Gesamt-Rekonstruktionsbild zu speichern und/oder an weitere Rechen- oder Bearbeitungseinheiten zu versenden und/oder graphisch oder numerisch anzuzeigen (nicht abgebildet).

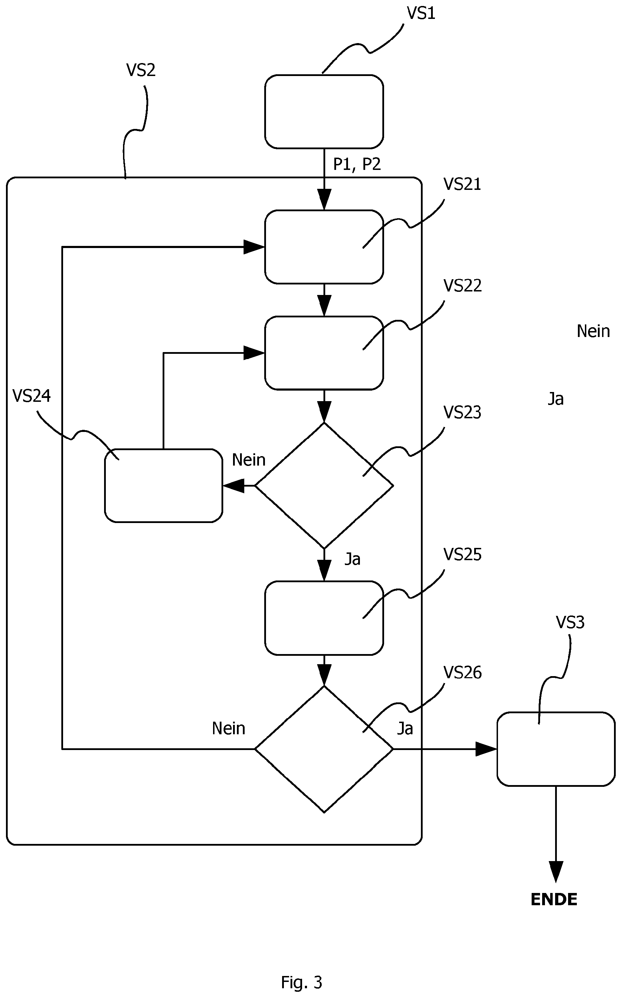

In Fig. 3 ist ein Ablaufdiagramm für ein Ausführungsbeispiel des erfindungsgemäßen Verfahrens zum Entzerren von OCT-Bildern dargestellt. Das abgebildete Verfahren weist einen Erfassungsschritt VS1 auf, in dem ein Bereich **ROI des Objekts** 20 aus einer ersten Ausrichtung γ1 und einer zweiten Ausrichtung y2 in einem ersten Bild P1 und einem zweiten Bild P2 erfasst wird.

Es ist natürlich auch möglich, dass weitere Bereiche des Objekts im Erfassungsschritt VS1 erfasst werden. In diesem Fall kann die Erfassungseinheit beispielsweise, wie zuvor beschrienen, eine Vielzahl von Erfassungsmodulen umfassen. Ebenfalls denkbar wäre, dass die Erfassungseinrichtung und/oder das zu erfassende Objekt derart rotiert und/oder verschoben werden, dass weitere Bereiche erfasst werden können. Anhand aller erfassten Bilder, die sowohl das erste und zweite Bild P1, P2 als auch die weiteren Bilder umfassen, wird im Bestimmungsschritt VS2 ein für jede Schicht globaler Brechungsindex berechnet, wobei aus einer Gesamtrekonstruktionsabweichung, welche mit Information aus allen lokalen Bildern bestimmt wird, ein entzerrtes Gesamt-Rekonstruktionsbild bestimmt wird.

Anhand des ersten und des zweiten Bilds P1, P2 werden im nachfolgenden Bestimmungsschritt VS2 in einem Unterschritt SV21 entsprechende Rekonstruktionsbilder R1, R2 mit einem initial festgelegten Brechungsindex *nᵢₙᵢₜ* von einer ersten Schicht 21 des Objekts 20 erzeugt. In einem weiteren Unterschritt SV22 werden in diesem Ausführungsbeispiel räumliche Rekonstruktionsabweichungen zwischen einzelnen Punkten in den beiden Rekonstruktionsbildern R1, R2 berechnet.

In dem vorliegenden Ausführungsbeispiel werden die Rekonstruktionsabweichungen mit der euklidischen Norm berechnet. Andere (gewichtete) Normen sind für die Berechnung der räumlichen Rekonstruktionsabweichungen ebenfalls denkbar.

In Unterschritt VS23 wird nun mindestens ein Abbruchkriterium abgefragt. Das Abbruchkriterium kann beispielsweise durch einen Schwellwert für die Zielfunktion und/oder eine Zielfunktionsänderung oder eine maximale Anzahl Schritte gegeben sein.

Wenn in Unterschritt VS23 entschieden wird, dass noch kein Minimum der Zielfunktion mit dem aktuellen Brechungsindex *n_{current}* erreicht ist, wird ein neuer **Brechungsindex** *n_{new,step}* für einen weiteren Optimierungsschritt in Unterschritt VS24 bestimmt. Das in Unterschritt VS24 durchgeführte Vorgehen zum Bestimmen eines neuen Brechungsindex *n_{new,step}* hängt dabei davon ab, welches Optimierungsverfahren (Gradienten-, Rastersuche-, oder Zufallssuche-Verfahren) verwendet wird. Wie bereits oben ausgeführt kann beispielsweise ein neuer Brechungsindex *n_{new,step}* anhand der ersten Ableitung der Zielfunktion im aktuellen Parameterpunkt bestimmt werden (Steepest-Descent-Verfahren) oder anhand der ersten und der zweiten Ableitung der Zielfunktion im aktuellen Parameterpunkt bestimmt werden. In VS24 werden die entsprechenden Rekonstruktionsbilder anhand des neuen Brechungsindex *n_{new,step}* aktualisiert, wobei in Unterschritt VS22 erneut Rekonstruktionsabweichungen für den neuen Brechungsindex *n_{new,step}* berechnet werden.

Wenn in Unterschritt VS23 ermittelt wurde, dass die Zielfunktion für den im Optimierungsverfahren ermittelten aktuellen Brechungsindex *n_{current}* nach dem oben beschrieben Abbruchkriterium minimal ist, wird der aktuelle Brechungsindex für die aktuelle Schicht gespeichert. Darüber hinaus wird das Verfahren mit einer, von der Oberfläche O des Objekts 20 aus betrachtet, tiefergelegenen Schicht fortgesetzt.

VS25 stellt einen mehrerer möglicher folgender Prozessschritte dar. Insbesondere kann aus den verschiedenen lokalen OCT-Bilder ein Gesamtrekonstruktionsbild erstellt werden. In Unterschritt VS26 wird nun abgefragt, ob die aktuelle Schicht die letzte, vorzugsweise innerste, Schicht ist, falls dies nicht der Fall ist, wird zu Schritt VS21 zurückgekehrt und anhand eines für die nächste Schicht initialen Brechungsindex *nᵢₙᵢₜ* entsprechende Rekonstruktionsbilder für die nächste tiefergelegene Schicht erzeugt.

Es können natürlich auch, vorzugsweise unterschiedliche, initiale Brechungsindizes für jede Schicht individuell vorgegeben werden, die beispielsweise aus der vorhergehenden Messung bekannt sind. Zusätzlich oder alternativ können die initialen Brechungsindizes auch aus früheren Schätzungen des Brechungsindex verwendet werden.

Falls in Unterschritt VS26 bestimmt wurde, dass die aktuelle Schicht die letzte Schicht ist, wird in diesem Ausführungsbeispiel anhand der im Bestimmungsschritt VS2 bestimmten Brechungsindizes im Entzerrungsschritt VS3 ein entzerrtes Gesamt-Rekonstruktionsbild berechnet und anschließend das Verfahren beendet.

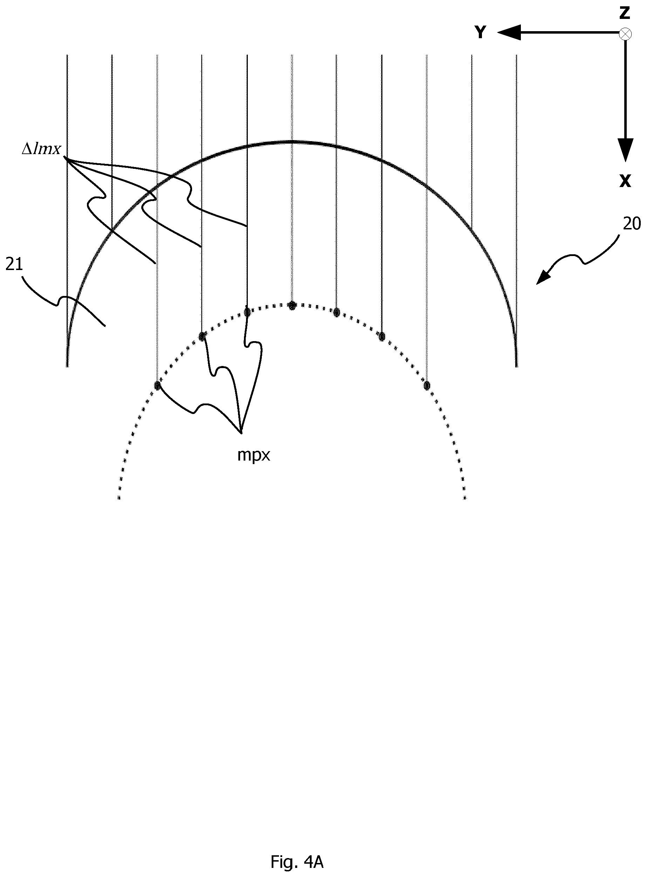

In den Figuren 4A bis 7C sind einzelne Verfahrensschritte des zuvor beschrieben erfindungsgemäßen Verfahrens beispielhaft dargestellt.

In Fig. 4A ist ein OCT-Bild mit dem Querschnitt des zu erfassenden Objekts 20 mit einer Schicht 21 abgebildet. Des Weiteren ist in Fig. 4A die gemessene Weglänge Δ*lmx* eingezeichnet aus Richtung der X-Achse, welche im Bild als gerade Linie dargestellt wird. Darüber hinaus sind in Fig. 4a einige Messpunkte mpx beispielhaft dargestellt.

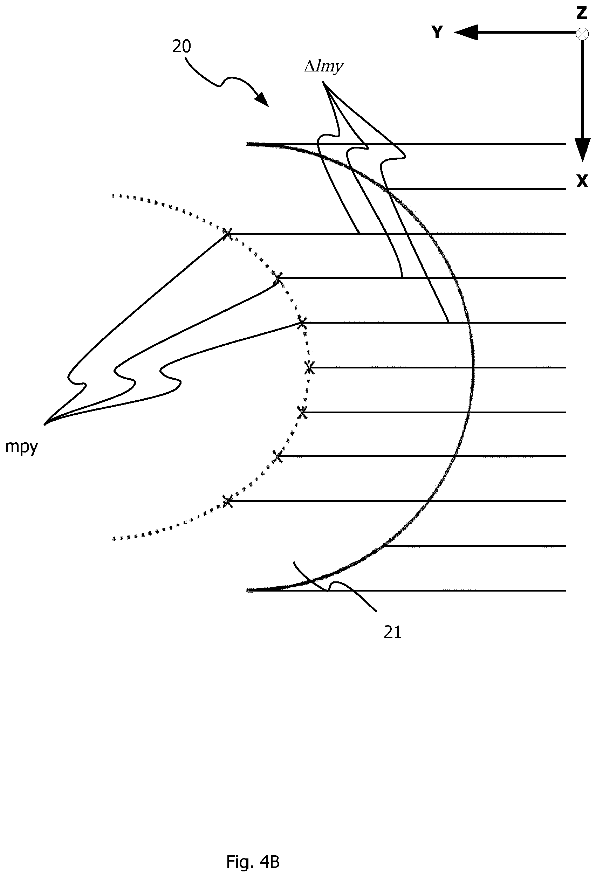

Fig. 4B zeigt das OCT-Bild mit dem Querschnitt des zu erfassenden Objekts und die gemessene Weglänge Δ*lmy* aus Richtung der Y-Achse, welche ebenfalls als gerade Linie im Bild dargestellt wird. Darüber hinaus sind in Fig. 4b einige Messpunkte mpy beispielhaft dargestellt.

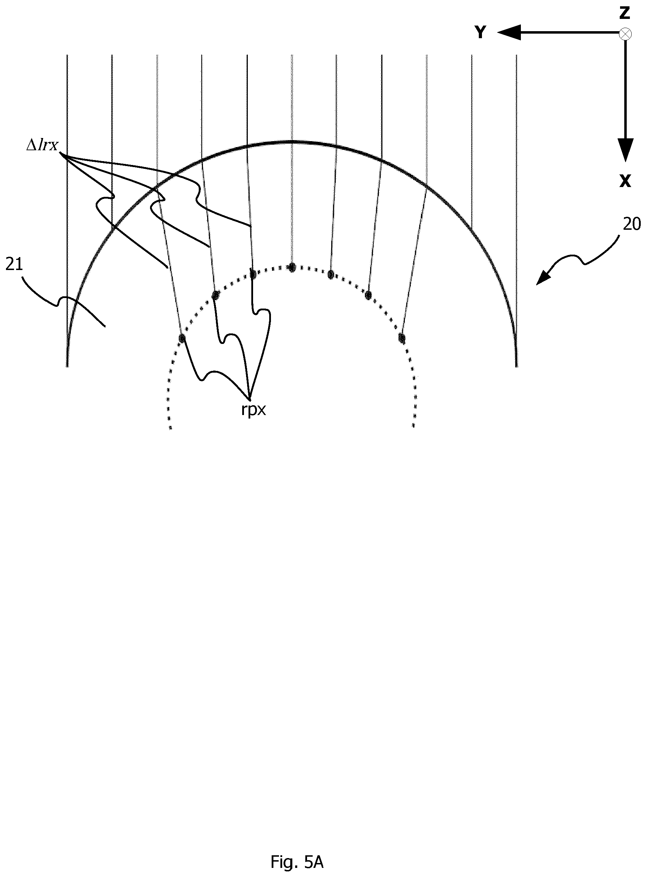

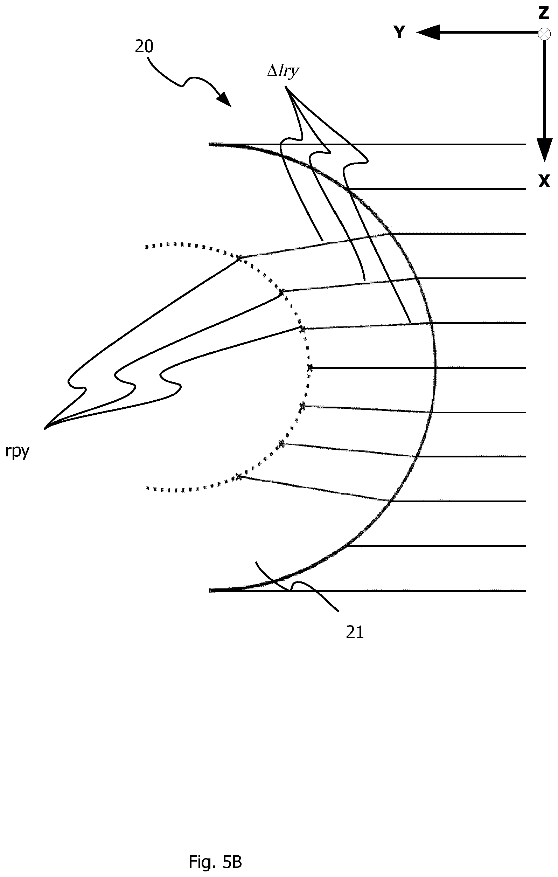

In Fig. 5A wird eine Vielzahl von rekonstruierten Punkten rpx bei einer Messung aus Richtung der X-Achse gezeigt, die von der Vorrichtung 100 rekonstruiert werden, wenn das Material der Schicht 21 des Objekts 20 einen Brechungsindex von *n*₁ = 1,3 aufweist. Sichtbar ist die geschätzte/rekonstruierte Weglänge Δ*lrx* und die Richtung des gebrochenen Strahles, welche man unter der Annahme von *n*₁ = 1,3 erhält. In Fig. 5B ist die Vielzahl von rekonstruierten Punkten rpy abgebildet, die bei einer Messung aus Richtung der Y-Achse rekonstruiert werden können. Sichtbar ist die geschätzte Weglänge Δ*lry* und die Richtung des gebrochenen Strahles, welche man unter der Annahme von *n*₁ = 1,3 erhält

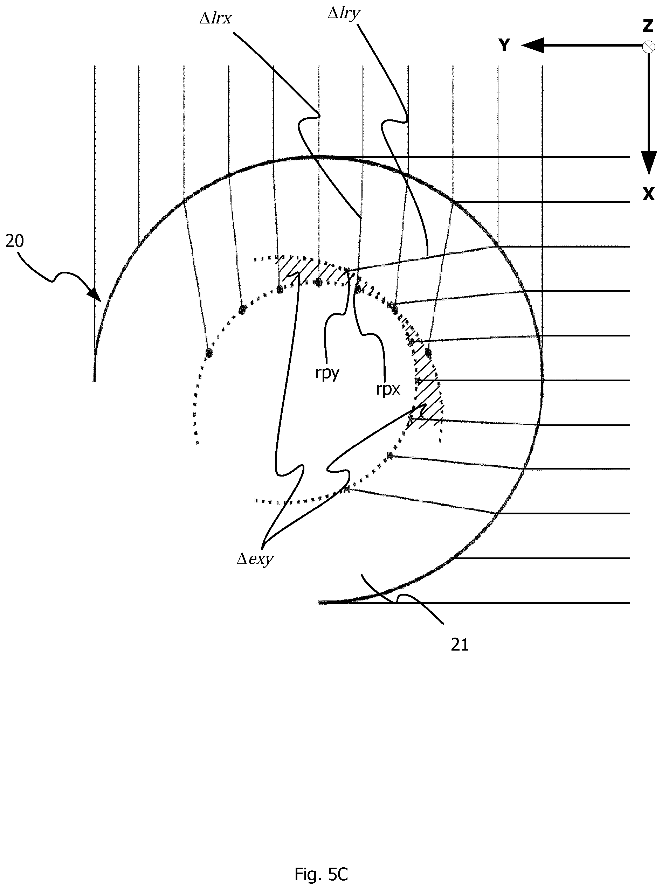

Fig. 5C zeigt eine Überlagerung der in Fig. 5A und Fig. 5B abgebildeten Messungen. Darüber hinaus sind die räumlichen Rekonstruktionsabweichungen Δ*exy* zwischen den einzelnen rekonstruierten Punkten rpx und rpy abgebildet.

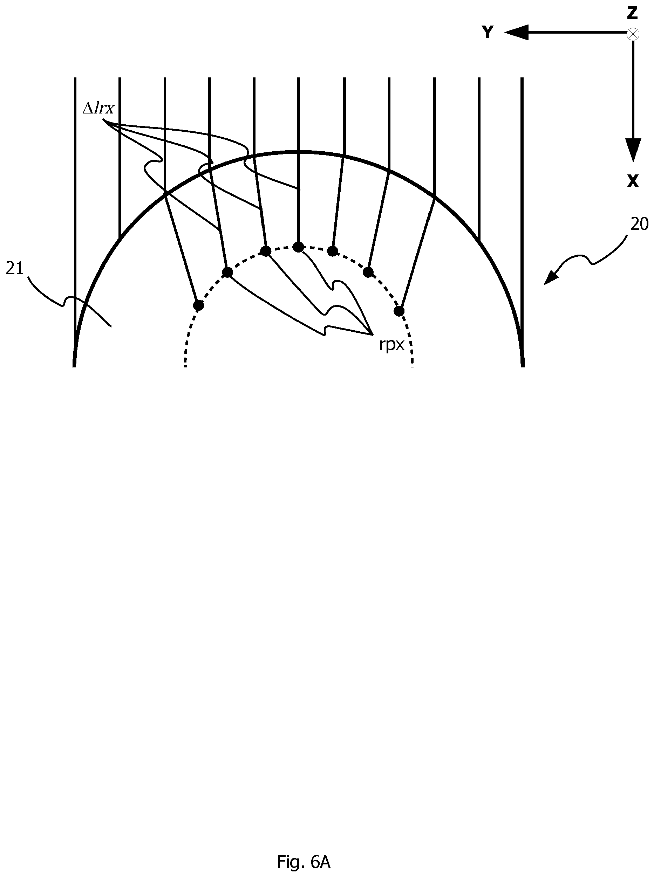

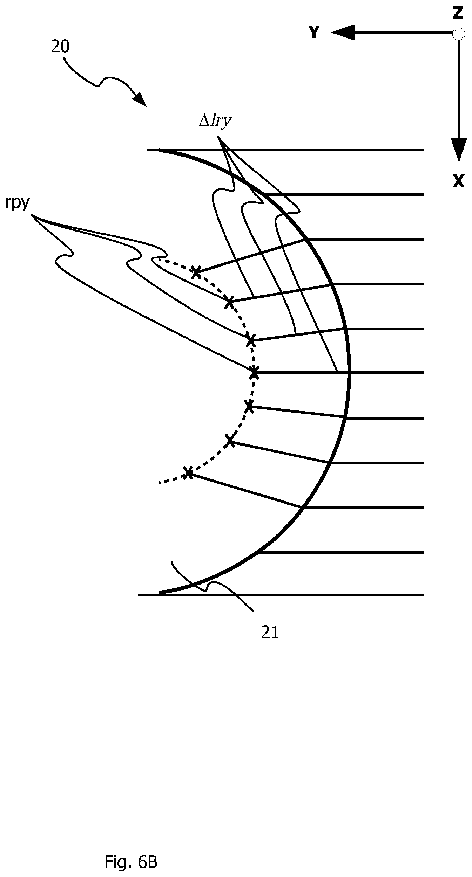

In Fig. 6A ist ein weiteres Beispiel für eine Vielzahl von rekonstruierten Punkten rpx bei der Messung von Fig. 4A des abgebildeten Objekts 20 aus der Richtung der X-Achse gezeigt. Der angenommene Brechungsindex des Materials der Schicht 21 beträgt in diesem Beispiel *n*₁ = 1,7. Fig. 6B zeigt eine Rekonstruktion ausgehend von der Messung von Fig 4B aus der Richtung der Y-Achse.

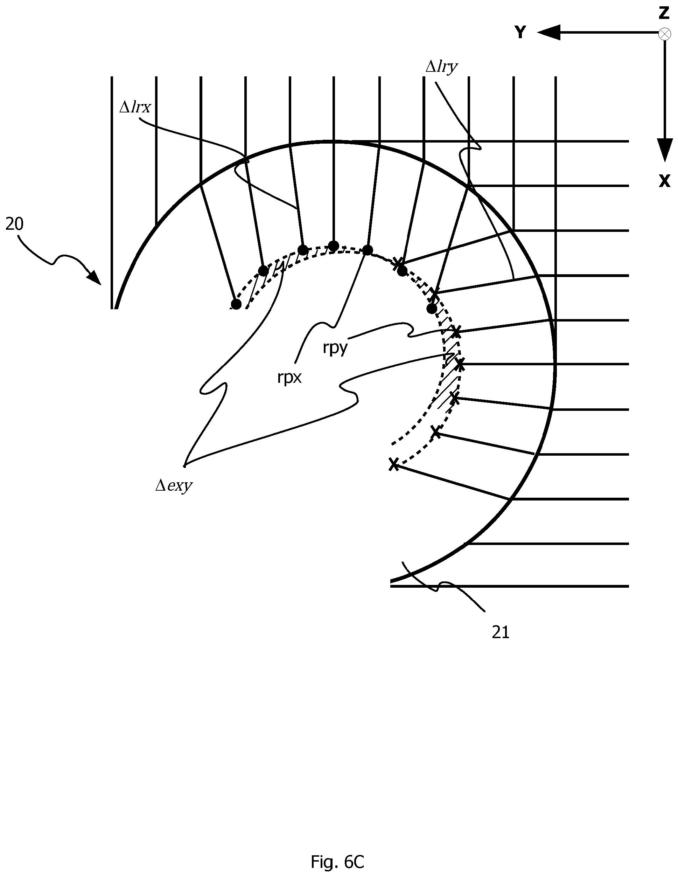

In Fig. 6C ist eine entsprechende Überlagerung der rekonstruierten Punkte rpx und rpy gezeigt. Darüber hinaus sind in Fig. 6C die räumlichen Rekonstruktionsabweichungen Δ*exy* zwischen den einzelnen rekonstruierten Punkten rpx und rpy gezeigt.

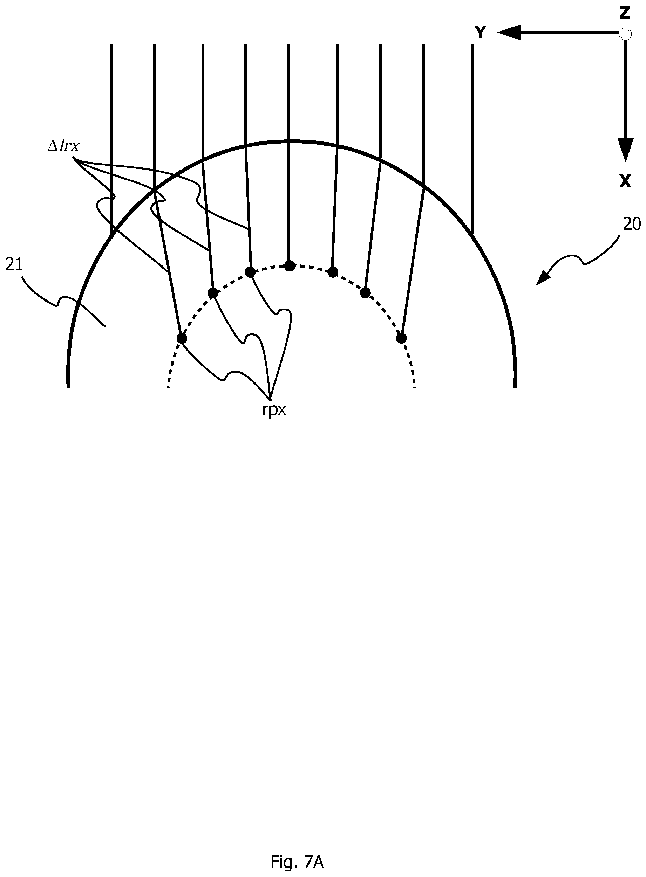

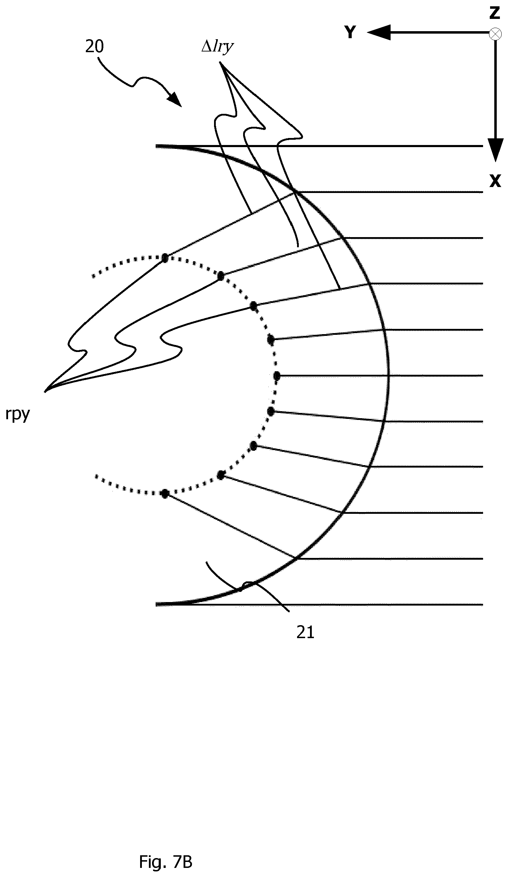

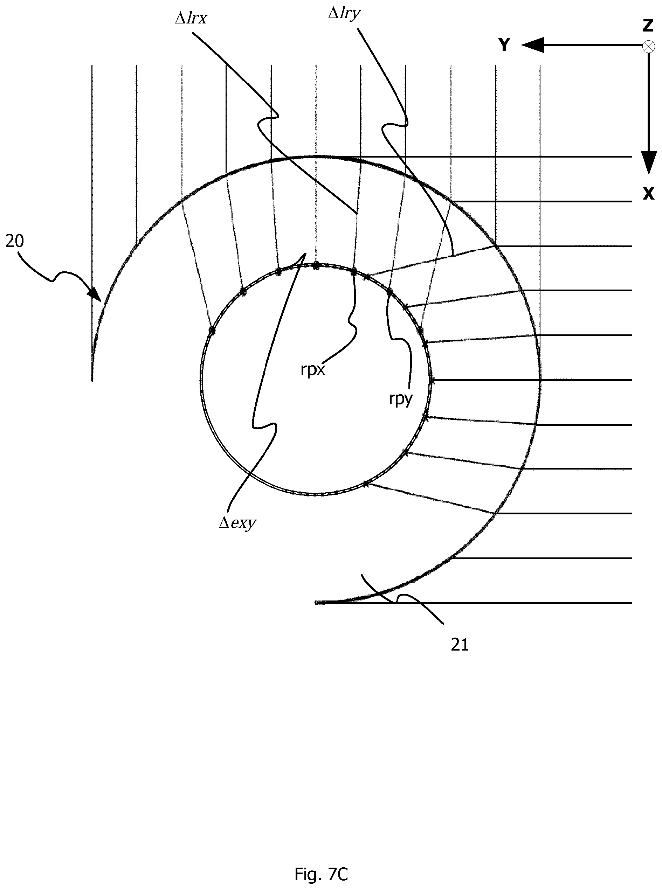

In den Fig. 7A bis 7B sind weitere rekonstruierte Punkte rpx und rpy einzeln gezeigt, die aus den Richtungen der X-Achse und Y-Achse mit einem Brechungsindex von *n*₁ = 1,5 rekonstruiert werden. Fig. 7C zeigt die entsprechende Überlagerung der rekonstruierten Punkte sowie die Rekonstruktionsabweichungen Δ*exy.* Die Rekonstruktionsabweichungen Δ*exy* aus Fig. 7C sind im Vergleich zu den in den Figuren 5C und 6C abgebildeten Rekonstruktionsabweichungen in Summe am kleinsten. Das Verfahren würde somit für das Material der Schicht 21 des Objekts 20 einen Brechungsindex von *n*₁ = 1,5 bestimmen.

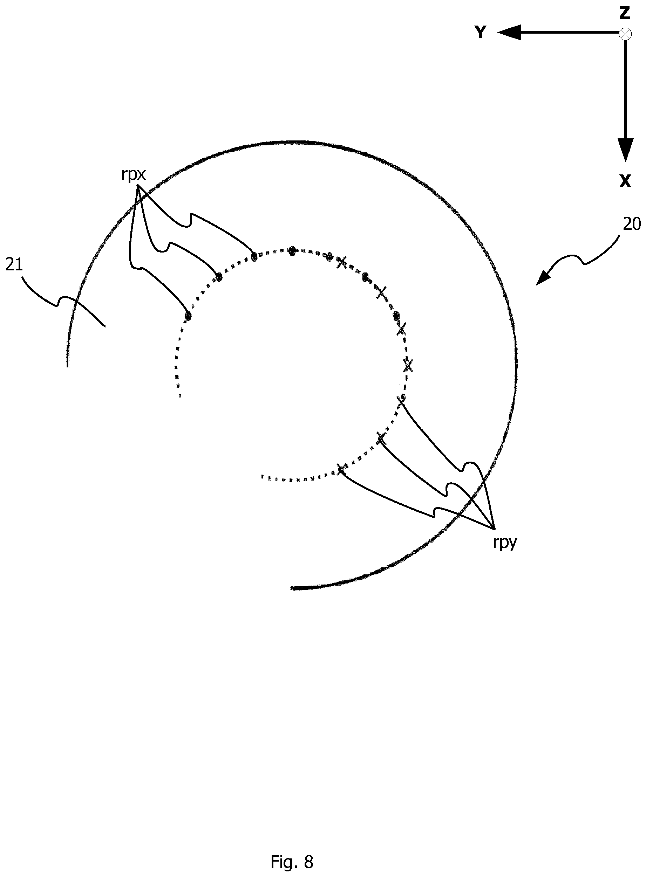

In Fig. 8 ist ein Querschnitt des zu erfassenden Objekts 20 abgebildet. Das Objekt 20 in Fig. 8 weist eine Schicht 21 mit einem homogen verteilten Brechungsindex *n*₁ auf. Darüber hinaus hat das Objekt einen hohlen Bereich in der Mitte. Bei dem in Fig. 8 abgebildeten Ausführungsbeispiel ist das Objekt 20 ein Rohr. Das Objekt 20 wird mit einer zweiachsigen optischen Vorrichtung 100 gemessen, wobei die zwei Achsen (in X- und Y-Richtung), entlang derer das Objekt vermessen wird, senkrecht zueinander stehen.

Des Weiteren werden in Fig. 8, als Folge der Ergebnisse von Fig. 7C, die Bereiche der Außen- und Innenflächen gezeigt, die mit der zweiachsigen optischen Vorrichtung 100 gemessen werden können, wobei sowohl rekonstruierte Punkte rpx, die aus der Richtung der X-Achse gemessen werden, als auch rekonstruierte Punkte rpy abgebildet sind, die aus der Richtung der Y-Achse gemessen werden. Zusammen mit rekonstruierten Punkten aus OCT-Bildern aus weiteren Richtungen, kann so ein Gesamtrekonstruktionsbild bestimmt werden.

### Bezugszeichenliste

- 20: zu erfassendes Objekt
- 21: erste (äußerste) Schicht des Objekts
- 22, 23: weitere (weiter innen liegende) Schichten des Objekts
- 100: Vorrichtung zum Entzerren von Bildern eines Objekts
- 110: Erfassungseinheit
- 110A, 110B: einzelne Erfassungsmodule der Erfassungseinheit
- *n*₁, *n*₂, *n*₃: Brechungsindizes der einzelnen Schichten des Objekts
- *nᵢₙᵢₜ*: initialer Brechungsindex (für die zu messende Schicht)
- *n_{new,step}*: neuer Brechungsindex für den nächsten Optimierungsschritt
- *n_{current}*: aktueller Brechungsindex
- mpx: eine Vielzahl von aus der X-Richtung bestimmten Messpunkten
- mpy: eine Vielzahl von aus der Y-Richtung bestimmten Messpunkten
- rpx: eine Vielzahl von aus der X-Richtung rekonstruierten Punkten
- rpy: eine Vielzahl von aus der Y-Richtung rekonstruierten Punkten
- N: Normale
- Li: eintreffender Lichtstrahl
- P1: erstes Bild
- P2: zweites Bild
- R1, R2: entsprechende Rekonstruktionsbilder
- ROI: Bereich des Objekts (Bereich-von-Interesse)
- T: Tangente
- VS1: Erfassungsschritt
- VS2: Bestimmungsschritt
- VS21 ...VS26: Unterschritte des Bestimmungsschritts
- VS3: Entzerrungsschritt
- X, Y, Z: X-, Y- und Z-Achse
- γ1: erste Ausrichtung
- γ2: zweite Ausrichtung
- Δexy: Rekonstruktionsabweichung(en)
- Δ*lrx*: tatsächliche/rekonstruierte Weglänge(n) in X-Richtung
- Δ*lry*: tatsächliche/rekonstruierte Weglänge(n) in Y-Richtung
- Δ*lmx*: gemessene Weglänge(n) in X-Richtung aus einem OCT-Bild
- Δ*lmy*: gemessene Weglänge(n) in Y-Richtung aus einem OCT-Bild

## Patentansprüche

1. **Verfahren** zum Entzerren von Bildern eines langgestreckten, vorzugsweise transluzenten, Objektes (20), die insbesondere mittels eines optischen Kohärenztomographie-Verfahrens erzeugt werden, wobei das langgestreckte Objekt mindestens 5-mal so lang wie breit ist, wobei das Verfahren folgende Schritte umfasst:
a) einen Erfassungsschritt (VS1), in dem mindestens ein Bereich (ROI) des Objekts (20) in mindestens einer ersten Ausrichtung (γ1) in einem ersten Bild (P1) und in mindestens einer zweiten, insbesondere unterschiedlichen, Ausrichtung (y2) in einem zweiten Bild (P2), vorzugsweise mittels eines optischen Kohärenztomographie-Verfahrens, erfasst wird, wobei der mindestens eine Bereich (ROI) insgesamt aus höchstens 10 Ausrichtungen erfasst wird; sowie
b) einen Bestimmungsschritt (VS2), wobei anhand der erfassten Bilder (P1, P2) entsprechende Rekonstruktionsbilder (R1, R2) des Bereichs (ROI) erzeugt werden,
wobei mindestens ein Brechungsindex (*n*₁, *n*₂, *n*₃) für jede einer Vielzahl von Schichten (21, 22, 23) des Objekts (20) anhand von, insbesondere räumlichen, Rekonstruktionsabweichungen (Δexy) zwischen dem ersten und zweiten Rekonstruktionsbild (R1, R2), vorzugsweise iterativ, bestimmt wird,
c) einen Entzerrungsschritt (VS3), wobei anhand der bestimmten Brechungsindizes (n1, n2, n3) ein entzerrtes Gesamt-Rekonstruktionsbild berechnet wird.

2. Verfahren nach Anspruch 1,
wobei der Erfassungsschritt (VS1) und/oder der Bestimmungsschritt (VS2) jeweils periodisch wiederholt werden oder ereignisgesteuert durchgeführt werden, wobei sich vorzugsweise eine Ausführungsrate des Erfassungsschritts (VS1) von einer Ausführungsrate des Bestimmungsschritts (VS2) unterscheidet, sofern beide Schritte periodisch wiederholt durchgeführt werden.

3. Verfahren nach Anspruch 1 oder 2,
wobei für jede der Schichten (21, 22, 23) des Objekts (20) der mindestens eine Brechungsindex (n1, n2, n3) mit einem Optimierungsverfahren bestimmt wird, indem insbesondere eine aus den, vorzugsweise räumlichen, Rekonstruktionsabweichungen (Δexy) berechnete Zielfunktion minimiert wird.

4. Verfahren nach einem der vorhergehenden Ansprüche, insbesondere nach Anspruch 3,
wobei die aus den, vorzugsweise räumlichen, Rekonstruktionsabweichungen (Δexy) berechnete Zielfunktion eine mehrdimensionale Zielfunktion ist, für die mit dem Optimierungsverfahren ein Satz von Brechungsindizes (n1, n2, n3) für die Schichten (21, 22, 23) des Objekts (20) bestimmt wird, der die mehrdimensionale Zielfunktion minimiert.

5. Verfahren nach einem der vorhergehenden Ansprüche, insbesondere nach einem der Ansprüche 1 bis 3,
wobei zuerst der mindestens eine Brechungsindex (n1) der ersten an eine Oberfläche des Objekts (20) angrenzenden Schicht (21) mit einem Optimierungsverfahren bestimmt wird.

6. Verfahren nach einem der vorhergehenden Ansprüche, insbesondere nach Anspruch 5,
wobei der mindestens eine Brechungsindex (n1, n2, n3) ausgehend von der ersten Schicht (21) sukzessive für jede weitere Schicht (22, 23), die insbesondere an die erste Schicht (21) bzw. eine jeweils vorangehende Schicht angrenzt, mit einem Optimierungsverfahren bestimmt wird.

7. Verfahren nach einem der vorhergehenden Ansprüche, insbesondere nach Anspruch 3,
wobei die räumlichen Rekonstruktionsabweichungen (Δexy) berechnet werden, indem die räumlichen Abstände zwischen einer Vielzahl von Punkten (rpx) einer Grenzfläche einer Schicht (21), deren Positionen anhand des ersten Rekonstruktionsbildes (R1) berechnet werden, mit einer Vielzahl von Punkten (rpy) der Grenzfläche der Schicht, deren Positionen anhand des zweiten Rekonstruktionsbildes (R2) und/oder mindestens eines weiteren Rekonstruktionsbildes, vorzugsweise aller vorhandenen Rekonstruktionsbilder, berechnet werden, bestimmt werden, wobei die Zielfunktion insbesondere als Summe der räumlichen Abstände berechnet wird.

8. Verfahren nach einem der vorhergehenden Ansprüche, insbesondere nach Anspruch 7,
wobei die Zielfunktion als Summe der Quadrate der räumlichen Abstände berechnet wird.

9. Verfahren nach einem der vorhergehenden Ansprüche, insbesondere nach Anspruch 3,
wobei der mindestens eine Brechungsindex (n1, n2, n3) für jede der Schichten (21, 22, 23) mit einem Rastersuche-Verfahren bestimmt wird, der die Zielfunktion minimiert.

10. Verfahren nach einem der vorhergehenden Ansprüche, insbesondere nach Anspruch 3,
wobei der mindestens eine Brechungsindex (n1, n2, n3) für jede der Schichten (21, 22, 23) mit einem Zufallssuche-Verfahren bestimmt wird, wobei ein Brechungsindex (n1, n2, n3) aus einem Satz von vorab festgelegten Brechungsindizes derart ausgewählt wird, dass die Zielfunktion minimiert wird.

11. Verfahren nach einem der vorhergehenden Ansprüche, insbesondere nach Anspruch 3,
wobei der mindestens eine Brechungsindex (n1, n2, n3) für jede der Schichten (21, 22, 23) mit einem Gradienten-Verfahren bestimmt wird, der die Zielfunktion minimiert.

12. Verfahren nach einem der vorhergehenden Ansprüche,
wobei im Erfassungsschritt (VS1) der Bereich (ROI) in einer Vielzahl von weiteren, insbesondere unterschiedlichen, Ausrichtungen in einer Vielzahl von weiteren Bildern aufgenommen wird.

13. Verfahren nach einem der vorhergehenden Ansprüche, insbesondere nach Anspruch 12,
wobei im Bestimmungsschritt (VS2) eine Vielzahl von entsprechenden Rekonstruktionsbildern des Bereichs (ROI) erzeugt wird, und die Brechungsindizes (n1, n2, n3) anhand von, insbesondere räumlichen, Rekonstruktionsabweichungen (Δexy) zwischen der Vielzahl von entsprechenden Rekonstruktionsbildern iterativ bestimmt werden.

14. Verfahren nach einem der vorhergehenden Ansprüche,
wobei der Erfassungsschritt (VS1) für einen oder eine Vielzahl von weiteren, sich insbesondere untereinander zumindest teilweise überlappenden, Bereichen des Objekts (20) durchgeführt wird, wobei jeder der weiteren Bereiche des Objekts aus zumindest zwei unterschiedlichen Ausrichtungen (γ1,γ2) erfasst wird, und
wobei im Bestimmungsschritt (VS2) für jeden Bereich des Objekts, der aus mindestens zwei Ausrichtungen (γ1,γ2) erfasst ist, die Brechungsindizes (n1, n2, n3) der Materialien der Schichten des Objekts bestimmt wird.

15. Verfahren nach einem der vorhergehenden Ansprüche,
wobei ein Winkel zwischen der ersten Ausrichtung (γ1) und der zweiten Ausrichtung (y2) einen Wert zwischen 10° und 120°, insbesondere zwischen 45° und 100°, vorzugsweise zumindest etwa 90°, beträgt.

16. Verfahren nach einem der vorhergehenden Ansprüche, insbesondere nach Anspruch 12 oder 13,
wobei ein Winkel zwischen der Vielzahl von weiteren Ausrichtungen jeweils einen Wert zwischen 40° und 100°, insbesondere zwischen 50° und 80°, vorzugsweise zumindest etwa 60°, aufweist.

17. Verfahren nach einem der vorherigen Ansprüche,
wobei das langgestreckte Objekt eine Länge aufweist, die mindestens 10-mal so groß ist wie eine Breite und/oder
zumindest abschnittsweise innen hohl ist und/oder
zumindest abschnittsweise keinen Hohlraum aufweist und/oder
mehrere Schichten, insbesondere mit unterschiedlichen Materialien,
vorzugsweise mit unterschiedlichen Brechungsindizes, aufweist und/oder
gebildet wird durch oder umfasst: ein ein- oder mehrschichtiges Rohr,
vorzugsweise Kunststoffrohr, oder einen ein- oder mehrschichtigen Schlauch, vorzugsweise Kunststoffschlauch, oder ein ein- oder
mehrschichtiges Kabel, vorzugsweise Glasfaserkabel, oder einen ein- oder mehrschichtigen Draht, vorzugsweise einen mit Kunststoffisolierung ummantelten Draht, oder einen ein- oder mehrschichtigen Katheter, wie beispielsweise Multilumen-Katheter.

18. Computerlesbares Medium, umfassend eine Vielzahl von Anweisungen, die, wenn sie von mindestens einem Prozessor ausgeführt werden, bewirken, dass der Prozessor das Verfahren nach einem der vorhergehenden Ansprüche ausführt, wenn ihm die Ergebnisse aus dem Schritt a) des Anspruches 1 vorliegen.

19. Vorrichtung (100) zum Entzerren von Bildern eines, langgestreckten, vorzugsweise transluzenten, Objekts (20), wobei das langgestreckte Objekt mindestens 5-mal so lang wie breit ist, nach einem der Ansprüche 1 bis 17, wobei die Vorrichtung folgendes ausweist:
- mindestens eine Erfassungseinheit (110), die dazu ausgebildet ist, mindestens einen Bereich (ROI) des Objekts (20), insbesondere mittels eines optischen Kohärenztomographie-Verfahrens, in mindestens einer ersten Ausrichtung (γ1) in einem ersten Bild (P1) und in mindestens einer zweiten, insbesondere unterschiedlichen, Ausrichtung (γ2) in einem zweiten Bild (P2), zu erfassen;
- mindestens eine Recheneinheit (120), die mit der Erfassungseinheit (110) verbunden und dazu ausgebildet ist,
o anhand der erfassten Bilder (P1, P2) entsprechende Rekonstruktionsbilder (R1, R2) des Bereichs (ROI) zu erzeugen, wobei mindestens ein Brechungsindex (n1, n2, n3) für jede einer Vielzahl von Schichten (21, 22, 23) des Objekts (20) anhand von, insbesondere räumlichen, Rekonstruktionsabweichungen (Δrp1, Δrp2, Δrp3) zwischen dem ersten und zweiten Rekonstruktionsbild (R1, R2), vorzugsweise iterativ, bestimmt wird; sowie
anhand der bestimmten Brechungsindizes (n1, n2, n3) ein entzerrtes Gesamt-Rekonstruktionsbild zu berechnen.

20. System zum Entzerren von Bildern eines Objekts (20), umfassend eine Vorrichtung (100) nach Anspruch 19, die dazu ausgebildet ist, das Verfahren nach einem der Ansprüche 1 bis 17 durchzuführen, sowie mindestens ein langgestrecktes, vorzugsweise transluzentes, Objekt (20).

## Claims

1. **Method** for equalizing images of an elongated, preferably translucent, object (20), which are generated in particular by means of an optical coherence tomography method, wherein the elongated object is at least 5 times as long as it is wide, wherein the method comprises the following steps:
a) a capture step (VS1), in which at least one region (ROI) of the object (20) is captured in at least one first orientation (γ1) in a first image (P1) and in at least one second, in particular different, orientation (y2) in a second image (P2), preferably by means of an optical coherence tomography method, wherein the at least one region (ROI) is captured from at most 10 orientations in total; and
b) a determination step (VS2), wherein corresponding reconstruction images (R1, R2) of the region (ROI) are generated on the basis of the captured images (P1, P2),
wherein at least one index of refraction (*n₁, n₂, n₃*) is determined for each of a plurality of layers (21, 22, 23) of the object (20) on the basis, in particular spatial, reconstruction deviations (Δexy) between the first and second reconstruction image (R1, R2), preferably iteratively,
c) an equalizing step (VS3), wherein an equalized overall reconstruction image is calculated on the basis of the determined indices of refraction (*n₁, n₂, n₃*).

2. Method as claimed in claim 1,
wherein the capture step (VS1) and/or the determination step (VS2) are each periodically repeated and/or carried out in an event-controlled manner, wherein preferably an execution rate of the capture step (VS1) differs from an execution rate of the determination step (VS2), provided both steps are carried out in a periodically repeated manner.

3. Method as claimed in claim 1 or 2,
wherein, for each of the layers (21, 22, 23) of the object (20), the at least one index of refraction (*n_{1,} n₂, n₃*) is determined using an optimization method in that a target function calculated from the, preferably spatial, reconstruction deviations (Δ*exy*) is minimized.

4. Method as claimed in any one of the preceding claims,
in particular as claimed in claim 3,
wherein the target function calculated from the, preferably spatial, reconstruction deviations (Δ*exy*) is a multidimensional function, for which a set of indices of refraction (*n₁, n₂, n₃*) for the layers (21, 22, 23) of the object (20) is determined using the optimization method, which minimizes the multidimensional target function.

5. Method as claimed in any one of the preceding claims,
in particular as claimed in any one of claims 1 to 3,
wherein firstly the at least one index of refraction (*n₁*) of the first layer (21) adjacent to a surface of the object (20) is determined using an optimization method.

6. Method as claimed in any one of the preceding claims,
in particular as claimed in claim 5,
wherein the at least one index of refraction (*n₁, n₂, n₃*) is determined successively, starting from the first layer (21), for each further layer (22, 23), which is in particular adjacent to the first layer (21) or a respective preceding layer, using an optimization method.

7. Method as claimed in any one of the preceding claims,
in particular as claimed in claim 3,
wherein the spatial reconstruction deviations (Δexy) are calculated in that the spatial distances between a plurality of points (rpx) of an interface of a layer (21), the positions of which are calculated on the basis of the first reconstruction image (R1), and a plurality of points (rpy), the positions of which are calculated on the basis of the second reconstruction image (R2) and/or at least one further reconstruction image, preferably all existing reconstruction images, are determined, wherein the target function is calculated in particular as the sum of the spatial distances.

8. Method as claimed in any one of the preceding claims,
in particular as claimed in claim 7,
wherein the target function is calculated as the sum of the squares of the spatial distances.

9. Method as claimed in any one of the preceding claims,
in particular as claimed in claim 3,
wherein the at least one index of refraction (*n₁, n₂, n₃*) is determined for each of the layers (21, 22, 23) using a grid search method which minimizes the target function.

10. Method as claimed in any one of the preceding claims,
in particular as claimed in claim 3,
wherein the at least one index of refraction (*n₁, n₂, n₃*) is determined for each of the layers (21, 22, 23) using a random search method,
wherein one index of refraction (*n₁, n₂, n₃*) is selected from a set of previously established indices of refraction such that the target function is minimized.

11. Method as claimed in any one of the preceding claims,
in particular as claimed in claim 3,
wherein the at least one index of refraction (*n₁, n₂, n₃*) is determined for each of the layers (21, 22, 23) using a gradient method, which minimizes the target function.

12. Method as claimed in any one of the preceding claims,
wherein in the capture step (VS1), the region (ROI) is recorded in a plurality of further, in particular different, orientations in a plurality of further images.

13. Method as claimed in any one of the preceding claims,
in particular as claimed in claim 12,
wherein in the determination step (VS2), a plurality of corresponding reconstruction images of the region (ROI) is generated, and the indices of refraction (*n₁, n₂, n₃*) are iteratively determined on the basis of, in particular spatial, reconstruction deviations (Δexy) between the plurality of corresponding reconstruction images.

14. Method as claimed in any one of the preceding claims,
wherein the capture step (VS1) is carried out for one or a plurality of further regions, which in particular at least partially overlap one another, of the object (20),
wherein each of the further regions of the object is captured from at least two different orientations (y1, y2), and
wherein in the determination step (VS2), the indices of refraction (*n₁, n₂, n₃*) of the materials of the layers of the object are determined for each region of the object which is captured from at least two orientations (γ1, y2).

15. Method as claimed in any one of the preceding claims,
wherein an angle between the first orientation (γ1) and the second orientation (y2) has a value between 10° and 120°, in particular between 45° and 100°, preferably at least approximately 90°.

16. Method as claimed in any one of the preceding claims,
in particular as claimed in claim 12 or 13,
wherein an angle between the plurality of further orientations has in each case a value between 40° and 100°, in particular between 50° and 80°, preferably at least approximately 60°.

17. Method as claimed in any one of the preceding claims,
wherein the elongated object has a length which is at least 10 times as great as a width and/or is internally hollow at least in some sections and/or does not have a cavity at least in some sections and/or has multiple layers, in particular comprising different materials, preferably having different indices of refraction and/or is formed by or comprises: a single layer or multilayered pipe,
preferably plastic pipe, or a single layer or multilayered hose, preferably plastic hose, or a single layer or multilayered cable, preferably glass fiber cable, or a single layer or multilayered wire,
preferably a wire jacketed with plastic insulation, or a single layer or multilayered catheter, such as a multi-lumen catheter.

18. Computer-readable medium, comprising a plurality of instructions which, when they are executed by at least one processor, cause the processor to carry out the method as claimed in any one of the preceding claims when the results from step a) of claim 1 are provided thereto.

19. Device (100) for equalizing images of an elongated, preferably translucent object (20), wherein the elongated object is at least 5 times as long as it is wide, as claimed in any one of claims 1 to 17, wherein the device comprises the following:
- at least one capture unit (110), which is designed to capture at least one region (ROI) of the object (20), in particular by means of an optical coherence tomography method, in at least one first orientation (γ1) in a first image (P1) and in at least one second, in particular different, orientation (y2) in a second image (P2);
- at least one computing unit (120), which is connected to the capture unit (110) and is designed - to generate corresponding reconstruction images (R1, R2) of the region (ROI) on the basis of the captured images (P1, P2),
wherein at least one index of refraction (*n₁, n₂, n₃*) is determined, preferably iteratively, for each of the plurality of layers (21, 22, 23) of the object (20) on the basis of, in particular spatial, reconstruction deviations (Δrp1, Δrp2, Δrp3) between the first and second reconstruction image (R1, R2); and
to calculate an equalized overall reconstruction image on the basis of the determined indices of refraction (*n₁*, *n₂, n₃*).

20. System for equalizing images of an object (20), comprising a device (100) as claimed in claim 19, which is designed to carry out the method as claimed in any one of claims 1 to 17, as well as at least one elongated, preferably translucent object (20).

## Revendications

1. Procédé pour redresser des images d'un objet (20) allongé, de préférence translucide, produites en particulier au moyen d'un procédé de tomographie par cohérence optique, dans lequel l'objet allongé est au moins 5 fois plus long que large, le procédé comprenant les étapes suivantes :
a) une étape d'acquisition (VS1) au cours de laquelle au moins une région (ROI) de l'objet (20) est acquise sous au moins une première orientation (y1) dans une première image (P1) et sous au moins une deuxième orientation (γ2), en particulier différente, dans une deuxième image (P2), de préférence au moyen d'un procédé de tomographie par cohérence optique, l'au moins une région (ROI) étant acquise au total sous 10 orientations différentes au maximum, et
b) une étape de détermination (VS2) dans laquelle sont générées à l'aide des images acquises (P1, P2) des images reconstruites (R1, R2) correspondantes de la région (ROI),
au moins un indice de réfraction (n₁, n₂, n₃) étant déterminé pour chaque couche parmi plusieurs couches (21, 22, 23) de l'objet (20) à l'aide d'écarts de reconstruction, en particulier spatiaux (Δexy), entre la première image reconstruite et la deuxième (R1, R2), de préférence de façon itérative,
c) une étape de redressement (VS3) dans laquelle une image reconstruite d'ensemble redressée est calculée à l'aide des indices de réfraction (n₁, n₂, n₃) déterminés.

2. Procédé selon la revendication 1, dans lequel l'étape d'acquisition (VS1) et/ou l'étape de détermination (VS2) sont exécutées chacune avec une répétition périodique ou en réponse à des événements, une fréquence d'exécution de l'étape d'acquisition (VS1) étant de préférence différente d'une fréquence d'exécution de l'étape de détermination (VS2), du moment que les deux étapes sont répétées de façon périodique.

3. Procédé selon la revendication 1 ou 2, dans lequel l'au moins un indice de réfraction (n₁, n₂, n₃) est déterminé pour chacune des couches (21, 22, 23) de l'objet (20) avec un procédé d'optimisation, en particulier en réduisant au minimum une fonction de performance calculée à partir des écarts de reconstruction (Δexy), de préférence spatiaux.

4. Procédé selon l'une des revendications précédentes, en particulier selon la revendication 3, dans lequel la fonction de performance calculée à partir des écarts de reconstruction (Δexy), de préférence spatiaux, est une fonction de performance multidimensionnelle, pour laquelle est déterminé pour les couches (21, 22, 23) de l'objet (20), avec le procédé d'optimisation, un ensemble d'indices de réfraction (n₁, n₂, n₃) qui réduit la fonction de performance au minimum multidimensionnelle.

5. Procédé selon l'une des revendications précédentes, en particulier selon l'une des revendications 1 à 3, dans lequel l'au moins un indice de réfraction (n₁) de la première couche (21) contiguë d'une surface de l'objet (20) est déterminé avec un procédé d'optimisation.

6. Procédé selon l'une des revendications précédentes, en particulier selon la revendication 5, dans lequel l'au moins un indice de réfraction (n₁, n₂, n₃) est déterminé successivement avec un procédé d'optimisation à partir de la première couche (21) pour chaque autre couche (22, 23), en particulier contiguë de la première couche (21) ou d'une couche précédente respective.

7. Procédé selon l'une des revendications précédentes, en particulier selon la revendication 3, dans lequel les écarts de reconstruction spatiaux (Δexy) sont calculés en déterminant les distances dans l'espace entre plusieurs points (rpx) d'une surface limite d'une couche (21) dont les positions sont calculées à l'aide de la première image reconstruite (R1) et plusieurs points (rpy) de la surface limite d'une couche dont les positions sont calculées à l'aide de la deuxième image reconstruite (R2) et/ou d'au moins une autre image reconstruite, de préférence de toutes les images reconstruites existantes, la fonction de performance étant en particulier calculée comme la somme des distances dans l'espace.

8. Procédé selon l'une des revendications précédentes, en particulier selon la revendication 7, dans lequel la fonction de performance est calculée comme la somme des carrés des distances dans l'espace.

9. Procédé selon l'une des revendications précédentes, en particulier selon la revendication 3, dans lequel l'au moins un indice de réfraction (n₁, n₂, n₃) est déterminé pour chacune des couches (21, 22, 23) avec un procédé de recherche en grille qui réduit la fonction de performance au minimum.

10. Procédé selon l'une des revendications précédentes, en particulier selon la revendication 3, dans lequel l'au moins un indice de réfraction (n₁, n₂, n₃) est déterminé pour chacune des couches (21, 22, 23) avec un procédé de recherche aléatoire, un indice de réfraction (n₁, n₂, n₃) étant choisi dans un ensemble d'indices de réfraction défini au préalable de façon à réduire la fonction de performance au minimum.

11. Procédé selon l'une des revendications précédentes, en particulier selon la revendication 3, dans lequel l'au moins un indice de réfraction (n₁, n₂, n₃) est déterminé pour chacune des couches (21, 22, 23) avec un procédé de gradient qui réduit la fonction de performance au minimum.

12. Procédé selon l'une des revendications précédentes dans lequel, dans l'étape d'acquisition (VS1), la région (ROI) est acquise sous plusieurs autres orientations, en particulier différentes, dans plusieurs autres images.

13. Procédé selon l'une des revendications précédentes, en particulier selon la revendication 12, dans lequel, dans l'étape de détermination (VS2), plusieurs images reconstruites correspondantes de la région (ROI) sont générées et les indices de réfraction (n₁, n₂, n₃) sont déterminés de façon itérative à l'aide d'écarts de reconstruction (Δexy), en particulier spatiaux, entre les plusieurs images reconstruites correspondantes.

14. Procédé selon l'une des revendications précédentes, dans lequel l'étape d'acquisition (VS1) est exécutée pour une ou plusieurs autres régions de l'objet (20), en particulier qui se chevauchent au moins partiellement entre elles, chacune des autres régions de l'objet étant acquise sous au moins deux orientations différentes (y1, y2), et
dans lequel, dans l'étape de détermination (VS2), les indices de réfraction (n₁, n₂, n₃) des matériaux des couches de l'objet sont déterminés pour chaque région de l'objet qui est acquise sous au moins deux orientations (y1, γ2).

15. Procédé selon l'une des revendications précédentes, dans lequel un angle entre la première orientation (y1) et la deuxième orientation (γ2) a une valeur comprise entre 10° et 120°, en particulier entre 45° et 100°, de préférence d'au moins 90° environ.

16. Procédé selon l'une des revendications précédentes, en particulier selon la revendication 12 ou 13, dans lequel chaque angle entre les plusieurs autres orientations présente une valeur comprise entre 40° et 100°, en particulier entre 50° et 80°, de préférence d'au moins 60° environ.

17. Procédé selon l'une des revendications précédentes, dans lequel l'objet allongé présente une longueur qui est au moins 10 fois plus grande qu'une largeur et/ou
est creux à l'intérieur au moins par sections et/ou
ne présente pas de cavité au moins par sections et/ou
comporte et/ou est formé de et/ou comprend plusieurs couches, en particulier de matériaux différents, en particulier avec des indices de réfraction différents : un tube monocouche ou multicouche, de préférence un tube en matière plastique, ou un tuyau monocouche ou multicouche, de préférence un tuyau en matière plastique, ou un câble monocouche ou multicouche, de préférence un câble de fibres de verre, ou un fil métallique monocouche ou multicouche, de préférence un fil métallique enveloppé d'une isolation en matière plastique, ou un cathéter monocouche ou multicouche, par exemple un cathéter à plusieurs lumières.

18. Support pouvant être lu par un ordinateur, comprenant plusieurs instructions qui ont pour résultat, quand elles sont exécutées par au moins un processeur, que le processeur exécute le procédé selon l'une des revendications précédentes quand les résultats de l'étape a) de la revendication 1 lui sont fournis.

19. Dispositif (100) pour redresser des images d'un objet (20) allongé, de préférence translucide, dans lequel l'objet allongé est au moins 5 fois plus long que large, selon l'une des revendications 1 à 17, lequel dispositif comprend :
- au moins une unité d'acquisition (110) conçue pour acquérir au moins une région (ROI) de l'objet (20), en particulier au moyen d'un procédé de tomographie par cohérence optique, sous au moins une première orientation (y1) dans une première image (P1) et sous au moins une deuxième orientation (γ2), en particulier différente, dans une deuxième image (P2),
- au moins une unité de calculateur (120) qui est connectée à l'unité d'acquisition (110) et conçue pour
O générer à l'aide des images acquises (P1, P2) des images reconstruites (R1, R2) correspondantes de la région (ROI),
au moins un indice de réfraction (n₁, n₂, n₃) étant déterminé pour chaque couche parmi plusieurs couches (21, 22, 23) de l'objet (20) à l'aide d'écarts de reconstruction (Δrp1, (Δrp2, Δrp3), en particulier spatiaux, entre la première image reconstruite et la deuxième (R1, R2), de préférence de façon itérative, et
pour calculer une image reconstruite d'ensemble redressée à l'aide des indices de réfraction déterminés (n₁, n₂, n₃).

20. Système pour redresser des images d'un objet (20), comprenant un dispositif (100) selon la revendication 19 qui est conçu pour exécuter le procédé selon l'une des revendications 1 à 17, ainsi qu'au moins un objet (20) allongé, de préférence translucide.
